# EUROPÄISCHE PATENTSCHRIFT

(11) **EP 1 064 213 B1**
(45) Veröffentlichungstag und Bekanntmachung des Hinweises auf die Patenterteilung: **22.01.2003**
(21) Anmeldenummer: 99915675.5
(22) Anmeldetag: 19.03.1999
(51) Int. Cl.: B65G 57/16

(54) **AUFNAHMEVERFAHREN UND -VORRICHTUNG FÜR SERIENERZEUGNISSE, INSBESONDERE KUNSTSTOFFBECHER**
METHOD AND DEVICE FOR RECEIVING MASS-PRODUCED ARTICLES, ESPECIALLY PLASTIC CUPS
PROCEDE ET DISPOSITIF DE RECEPTION POUR ARTICLES EN SERIE, NOTAMMENT POUR GOBELETS EN PLASTIQUE

(30) Priorität: 20.03.1998 DE 19812414
(43) Veröffentlichungstag der Anmeldung: 03.01.2001
(60) Teilanmeldung: 02009553.5
(73) Patentinhaber: Lauermann, Walter, 97320 Estenfeld (DE)
(72) Erfinder: Lauermann, Walter, 97320 Estenfeld (DE)
(74) Vertreter: Götz, Georg, Dipl.-Ing.
(86) Internationale Anmeldenummer: EP9901862
(87) Internationale Veröffentlichungsnummer: WO99048781

(56) Entgegenhaltungen:
- DE-C- 4 436 531
- GB-A- 2 191 459

## Beschreibung

Die Erfindung betrifft ein Verfahren und eine Vorrichtung zur Aufnahme von Serienerzeugnissen beziehungsweise Stapelgütem, insbesondere Kunststoffbechem, die nach ihrer Bildung in einem Form- und/oder Stanzwerkzeug daraus ausgeworfen werden. Die Vorrichtung besitzt eine dem Werkzeug zugeordnete Fangeinrichtung, um die Erzeugnisse aus dem Werkzeug zu erfassen, und eine der Fangeinrichtung nachgeordnete Stapelhalteeinrichtung, in der die Erzeugnisse übernehmbar und aneinandergereiht für den Weitertransport verfügbar gehalten werden. Die Fang- und die Stapelhalteeinrichtung sind aufeinander zu- und voneinander wegbewegbar.

Zur Herstellung von Kunststoffbechem im Tiefziehverfahren ist der Einsatz von Polystyrol als Werkstoff bekannt. Dieser wird zunehmend verdrängt durch Polypropylen, das als preiswerter Werkstoff zur Verfügung steht, jedoch schwieriger verarbeitbar ist. Ein daraus gefertigter Artikel erreicht erst Stunden nach seiner Herstellung seine endgültige Festigkeit. Es ist deshalb besonders wichtig, die aus dem Werkzeug ausgeschobenen - weichen - Artikel beim anschließenden Stapelvorgang vor mechanischen Belastungen in axialer und radialer Richtung weitestgehend zu schützen.

Um aus derartigem, thermoplastischem Kunststoffmaterial tiefgezogene Teile, insbesondere Becher oder sonstige Behältnisse, herzustellen, ist eine Vorrichtung zum Formen, Stanzen und Stapeln dieser Teile bekannt (DE-U-91 08 344.3). Nach dem Formen des Kunststoffteils wird das Formwerkzeug geöffnet und das Kunststoffteil in eine Abstapelvorrichtung gestoßen. Um ein sicheres Übergeben der Artikel in die Abstapelvorrichtung zu gewährleisten, wird das Werkzeug geschwenkt und geöffnet sowie die Abstapelvorrichtung an das Werkzeug herangefahren. Dabei ist nachteilig, daß das zuletzt ausgestoßene, noch warme und deshalb leicht deformierbare Kunststofftell die bereits gestapelten Kunststoffteile innerhalb der Abstapelvorrichtung axial verschieben muß. Deshalb ist leicht eine Deformation des zuletzt ausgestoßenen und in der Abstapelvorrichtung aufgefangenen Teils möglich. Zum Beispiel oval deformierte Kunststoffteile sind später nur schwer zu bedrucken, denn sie können in der Druckmaschine Reibungen verursachen, was Störungsmeldungen verursacht.

Aus DE-C-36 24 638 ist eine Rückhaltevorrichtung für einen Stapelkanal bekannt, wobei mittels den Stapelkanal begrenzenden Führungsstangen Deckel für Kunststoffbehälter gehalten werden. Die Rückhaltevorrichtung zeichnet sich durch Klinken aus, die in die Führungsstangen integriert und über Druckfedem radial federnd gelagert sind. Die Vorderseite der federnden Klinken ist dem Inneren des Stapelkanals zugewandt und besteht aus flachen Flanken, die in sägezahnartiger Reihenfolge angeordnet sind, so daß sich im Bereich der tiefer gelegenen Teile dieser Flanken in Querrichtung verlaufende Vorsprünge für die Ränder der zu haltenden Deckel herausbilden. Allerdings liegen die Vorsprünge einander derart diametral gegenüber, daß Engpässe gebildet werden, die zu einer Verformung der Deckel führen. Zudem ist nichts darüber offenbart, wie die Deckel aus einem Formwerkzeug übergeben und in den Stapelkanal eingeführt werden. Ein weiterer Nachteil besteht darin, daß der zuletzt in den Stapelkanal gelangte Deckel den vorausgegangenen Deckel nachschieben muß, was die Formbeständigkeit erheblich mindert. Denn so entsteht ein starker mechanischer Druck auf den zuletzt eingeschobenen und noch weichen und damit verformbaren Deckel.

Aus DE-A-32 37 943 ist ein Magazin zum Stapeln von Papiergegenständen bekannt, wobei an mindestens einer Führungsseite des Magazins schuppenartig aufeinanderfolgende Schrägflächen als Führungsflächen angeordnet sind. Die Schrägflächen verengen den Führungsschacht in Förderrichtung und sollen verhindem, daß die dünnen Seiten der Papiergegenstände, für die Kellform vorausgesetzt ist, den dicken Seiten in Förderrichtung voreilen. Auch hier ist für die Übernahme der Papiergegenstände aus einem Werkzeug oder dergleichen nichts entnehmbar.

In DE-C- 44 36 531 ist ein Verfahren zum Überführen von mehrreihig aus einer thermoplastischen Kunststoff-Folie geformten und ausgestanzten Partikeln in einrelhige Stapel offenbart. Mittels einer Vakuumübergabeeinrichtung werden aus thermoplastischer Kunststoff-Folie geformte Becher in eine Aufnahmebrille gesetzt. In Durchlaufrichtung wird die Aufnahmebrille um einen Reihenabstand verschoben und dann wieder zurückbewegt. Offensichtlich können die Stapel allerdings nur eine Höhe von drei Becherstücken erreichen.

Eine Aufnahmevorrichtung etwa der eingangs genannten Art ist aus dem Deutschen Patent DE-C-195 09 057 bekannt. Darin wird eine Unterteilung der Übergabebewegung vom Formwerkzeug zu einem Abstapelförderband in zwei Schritte vorgeschlagen, wodurch die Bewegungszeit pro Schritt reduziert werden soll. Im ersten Schritt werden die Kunstsloffteile, beispielsweise Becher, aus dem geöffneten Werkzeug auf eine erste Aufnahmeplatte gestoßen und gesaugt. Durch Schwenken der ersten Fang- bzw. Sauplatte gelangen die Becher mit dem Boden voran an eine zweite Saugplatte, wo sie emeut angesaugt werden. Von der ersten Fang- bzw. Saugplatte werden sie dabei durch einen kurzen Druckluftstoß weggeblasen. Während die erste Fang- bzw. Saugplatte wieder zurückgeschwenkt wird, wird die zweite Saugplatte mit dem bodenseitig angesaugten Becher linear verschoben und soweit abgesenkt, daß der Becher auf einem bereits aufgebauten Becherstapel abgesetzt werden kann. Dies erfordert allerdings den zusätzlichen Steueraufwand, daß die Vertikalbewegung der zweiten Saugplatte von Takt zu Takt reduziert werden muß, weil der Stapel in seiner Höhe wächst. Ferner erfordert das Schwenken der ersten Fang- und Saugplatte einen zusätzlichen Konstruktionsaufwand. Weiter ist es aufwendig, daß die Bewegungen der ersten Fang- und Saugplatte sowie der zweiten Saugplatte miteinander koordiniert bzw. synchronisiert werden müssen, was zu einer aufwendigen Steuerung führt.

In GB-A-2 191 459 ist ein Aufnahmeverfahren und eine Aufnahmevorrichtung entsprechend dem jeweiligen Teil/Obergriff der Patentansprüche 1 und 6 offenbart. Ein Formwerkzeug stanzt und formt aus einer Kunststoffolie einzelne Becher, welche mit ihrem Öffnungsrand zunächst auf eine Extraktorplatte gesetzt werden, von wo aus sie von einer Fangeinrichtung erfaßt werden. Diese saugt mittels jeweiliger Saugorgane die einzelnen Becher von außen bodenseitig an. Ein Schwenkmechanismus schwenkt die Fangeinrichtung mit den angesaugten Bechem zu Stapelkanälen, welche jeweils durch eine kreisartige Reihe von Greifstiften mit radial gefederten Backen als Halteelemente definiert sind. Jedem solchen Stapelkanal ist in der Fangeinrichtung ein Saugorgan zugeordnet, welches einen Becher bodenseitig hält. Über die Saugorgane der Fangeinrichtung werden die Becher auf bereits gebildete Becher-Stapel in jedem Stapelkanal gestoßen. Bei der bekannten Aufnahmevorrichtung sind für den Transport von Kunststoff-Bechern aus dem Formwerkzeug nicht nur die Fangeinrichtung mit Saugorganen, sondern noch zusätzlich die Extraktorplatte notwendig. Notwendig sind auch die Schritte des Aufsetzens der Becher auf die Extraktorplatte und des nachfolgenden Absaugens der Kunststoffbecher von der Extraktorplatte und des Umschwenkens der Fangeinrichtung mit den Saugorganen zum Stapelkanal mit horizontaler Stapelrichtung. Dabei wird eine Rückhaltevorrichtung angestrebt, die einen kegelstumpfförmigen oder pyramidenstumpfförmigen Hohlkörper beim Eintritt in einen Stapelkanal in der Weise festzuhalten vermag, dass der größte Querschnitt des Gegenstands senkrecht zur Längsachse des Kanals liegt. Zu der offenbarten Rückhaltevorrichtung an einem Eingang eines Stapelkanals gehört ein Backen mit einer Rückhaltenut. Der genannte Backen ist in einem Hohlraum der Begrenzungsstruktur des Kanals gelagert, aus der der Backen teilweise und radial in das Kanalinnere aufgrund der kombinierten Einwirkung einer Druckfeder und von Einrichtungen zur Begrenzung des Vorsprungs des Backens in das Kanalinnere vorsteht.

Zur Lösung dieses Problemkreises wird das im Patentanspruch 1 angegebene Aufnahmeverfahren sowie die im Patentanspruch 6 angegebene Aufnahmevorrichtung erfindungsgemäß vorgeschlagen. Erfindungsgemäß wird die Stapelhalteeinrichtung mit einer aktiven Rolle bzw. Funktion versehen, nämlich selbst die Erzeugnisse von der Fangeinrichtung herauszuholen, wonach dann die Option einer schonenden Stapelbildung besteht. Damit ist ferner die Möglichkeit eröffnet, für die Fangeinrichtung den Bewegungsablauf und auch die zeitliche Ablaufsteuerung und Synchronisation erheblich zu vereinfachen. So besteht eine besondere Ausbildung der Erfindung darin, daß das Aufeinander- und Auseinanderbewegen von Fang- und Stapelhalteeinrichtung linear und/oder regelmäßig abwechselnd erfolgt. Mit dem linearen Bewegungsablauf ist eine Änderung der Ausrichtung des in der Fangeinrichtung erfaßten Erzeugnisses vermieden bzw. nicht mehr notwendig. Vor allem bei einer Becherform können die Erzeugnisse ohne Änderung ihrer Bewegungsausrichtung von der Fangeinrichtung aus dem Formwerkzeug erfaßt und in die Stapelhalteeinrichtung übergeben sowie dort - unter Beibehaltung der Bewegungsausrichtung aus dem Formwerkzeug - aufeinander gestapelt werden. Es liegt aber auch im Rahmen der Erfindung, den Bewegungsablauf vor allem außerhalb der Erzeugnisübergabeperiode mit nichtlinearen, rundlichen und/oder polygonen Bewegungsbahnen einschließlich Dreh- oder Schwenkbewegungen zu kombinieren. So kann der Fangeinrichtung nach ausreichender Entfernung von der Stapelhalteeinrichtung relativ zum Formwerkzeug eine Nick- und/oder Schwenkbewegung erteilt werden.

Auf der Basis der allgemeinen erfindenischen Idee ergibt sich die Möglichkeit, bei der Aufeinanderbewegung die Fengeinrichtung zum Schieben des oder der Erzeugnisse in die Stapelhalteeinrichtung einzusetzen. Insbesondere kann ein bereits in der Stapelhalteeinrichtung befindliches Erzeugnis beim oder nach dem Aufeinanderbewegen von der Fangeinrichtung weiter verschoben werden, um die Stapelung der Erzeugnisse dort weiter zu betreiben.

Beim Aufnehmen frisch geformter Kunststofferzeugnisse ist deren Erkalten unter Beibehaltung der spezifizierten Form problematisch. In dieser Hinsicht ist nach einer besonders vorteilhaften Ausbildung der Erfindung vorgesehen, daß das Erzeugnis, das in der Stapelhalteeinrichtung jeweils zuletzt ergriffen wurde, für den Zeitraum wenigstens einer Auseinander- und nachfolgenden Aufeinanderbewegung bis zum Ergreifen eines nächsten Erzeugnisses von einer Berührung mit vorher ergriffenen, gegebenenfalls gestapelten Erzeugnissen freigehalten wird.

Erfindungsgemäß wird die Anordnung von Grelfkörpern jeweils ein- oder mehrfach an oder in sowohl der Fang- als auch der Stapelhalteeinrichtung vorgeschlagen. Die Greifkörper sind derart ausgebildet, daß mit dem Bewegen der Fang- und Stapelhalteeinrichtung zueinander und voneinander eine Übernahme der Erzeugnisse von der Fang- in die Stapelhalteeinrichtung stattfindet. Damit ist die Möglichkeit für die besonders vorteilhafte Ausbildung eröffnet, wonach die Stapelhalteeinrichtung ortsfest beispielsweise in einem Maschinenfundament verankert bzw. stillgehalten sein kann, während die Fangeinrichtung zwischen dem Kunststoffwerkzeug und der Stapelhalteeinrichtung mit einfacher, vorzugsweise linearer Bewegung hin- und herfahren kann. Auf der Basis der Erfindung läßt sich der Übernahme- und Stapelvorgang für das Kunststofferzeugnis in zwei Phasen aufteilen: Übernahme des Kunststofferzeugnisses aus dem Werkzeug mittels der Fangeinrichtung; Übergabe des Kunststofferzeugnisses aus der Fangeinrichtung an die Stapelhalteeinrichtung und dortige Stapelung, wobei eine Annäherung beider Einrichtungen relativ zueinander stattfindet.

Nach der Erfindung sind die Greifkörper zur Fang- bzw. Stapelhaiteeinrichtung jeweils vorspringend gestattet. Dadurch läßt sich eine schonende Übergabe des frisch aus dem Formwerkzeug gelangenden Kunststofferzeugnisses an die Stapelhalteeinrichtung leichter herbeiführen. Dies wird in weiterer Konkretisierung der Erfindung dadurch gefördert, daß die Greifkörper auf der Fangeinrichtung und die Greifkörper auf der Stapelhalteeinrichtung gegeneinander versetzt angeordnet sind. Dadurch können sich die Fang- und Stapelhalteeinrichtung im Zuge ihrer Bewegung auf- undloder aneinander mit ihren jeweiligen (gegeneinander versetzten) Greifkörpern gegenseitig durchsetzen, durchdringen und/oder ineinanderfahren. Ein von der Fangeinrichtung bereits erfaßtes Kunststofferzeugnis kann so durch die eindringenden Greifkörper der Stapelhalteeinrichtung übernommen und im Zuge des Auseinanderfahrens dort verbleiben.

Eine schonende Übergabe frischer und noch deformierbarer Kunststofferzeugnisse läßt sich dadurch erleichtern, daß die Greifkörper symmetrisch gegenüber einer Ebene, Achse, einem Zentrum oder einem sonstigen Symmetrieelement innerhalb der Fang- und/oder Stapelhalteeinrichtung angeordnet sind, und dieses Symmetrieelement mit einem Symmetrieelement des zugeordneten bzw. zu erfassenden Erzeugnisses deckungsgleich liegt. In besonderer Ausgestaltung dieses Gedankens sind die Greifkörper längs eines Profils oder Grundrisses angeordnet, das dem Umfang, Umriß oder der sonstigen Gestalt des aufzunehmenden Erzeugnisses entspricht.

Nach einer Ausbildung der Erfindung sind die Greifkörper mit Hänge-, Klemm-, Rast-, Schnapp- und/oder Hakenelementen versehen, die zum lösbaren Eingriff mit dem zu erfassenden Erzeugnis ausgebildet sind. Mit diesen Elementen läßt sich die Greiffunktion in der Fang- oder der Stapelhalteeinrichtung realisieren. Zweckmäßig sind die genannten Elemente an solchen Stellen angeordnet, von wo aus sie das Kunststofferzeugnis möglichst schonend und insbesondere in seinen robustesten Bereichen und Abschnitten erfassen, beim Becher beispielsweise der Öffnungsrand, können.

Nach einer weiteren Ausbildung der Erfindung sind die Greifkörper mit Krall-, Widerhalt-, Widerhakelementen oder sonstigen Zieh- undloder Schubmitteln derart versehen, daß im Zuge der Zu- und/oder Auseinanderbewegung von Fangund Stapelhalteeinrichtung den erfaßten Erzeugnissen eine Zieh-, Schiebe- oder Schubkraft in Richtung von der Fang- zur Stapelhalteeinrichtung erteilt wird. Damit läßt sich ein schonendes Aufschieben auf einen bereits vorhandenen Stapel vorher übemommener Kunststoffeizeugnisse erreichen. Insbesondere wird die Vermeidung des aus dem Stand der Technik resultierenden Nachteils, daß ein frisch geformtes und übernommenes Erzeugnis einen bereits aus früher übernommenen Erzeugnissen gebildeten Stapel verschieben muß; unterstützt. Denn die Schubmittel können insbesondere so gestaffelt angeordnet sein, daß für das zuletzt übernommene, noch frische bzw. warme Kunststofferzeugnis zunächst ein gewisser Abstand zu dem Stapel früher übernommener Erzeugnisse eingehalten wird.

Um beim Erfassen eines Kunststofferzeugnisses durch die Greifkörper den Druck auf das Erzeugnis möglichst zu minimieren, ist nach einer Erfindungsausbildung vorgesehen, daß die genannten Elemente oder Schubmittel, insbesondere wenn sie auf unterschiedlichen Greifkörpem liegen, in Richtung von der Fang- zur Stapelhalteeinrichtung gegeneinander versetzt angeordnet sind. Hiermit läßt sich ein sogenannter "Hoch-/Tief-Effekt" erzielen: Wenn die genannten Elemente oder Schubmittel zum Erzeugnis vorspringen, aber in Übernahmerichtung gegeneinander versetzt liegen, wird die Anzahl der Engstellen erheblich vermindert und damit die Deformationsgefahr für das frische und noch empfindliche Kunststofferzeugnis minimiert. Diese vorteilhafte Wirkung läßt sich noch weiter dadurch fördern, daß unterschiedliche, voneinander beabstandete Greifkörper unterschiedliche Anzahlen an den Elementen oder Zieh- bzw. Schubmitteln besitzen. Die versetzte Anordnung läßt sich so leichter realisieren.

Um eine kompakte und gezielte Greif- und Führungswirkung vor allem in der Fangeinrichtung zu erreichen, sind nach einer vorteilhaften Ausbildung der Erfindung die Greifkörper, auch wenn sie einem gemeinsam zu erfassenden Erzeugnis zugeordnet sind, in unterschiedliche Gruppen angeordnet bzw. unterteilt. Die Greifkörper einer Gruppe, beispielsweise eines Paares bzw. mit zwei Greifkörpem, besitzen einen deutlich kleineren Abstand voneinander als von den Greifkörpem einer anderen Gruppe. Damit läßt sich die Greif- und Führungsfunktion verstärkt auf bestimmte Bereiche oder Abschnitte des zu erfassenden Erzeugnisses lokalisieren.

Damit im laufenden Übemahmebetrieb für die Kunststofferzeugnisse eine zuverfässige Stapelung erreicht wird, ist nach einer Ausbildung der Erfindung vorgesehen, daß die Greifkörper insbesondere auf der Stapelhalteeinrichtung als flächige Krallvorsprünge mit einer dem Erzeugnis zugeordneten innenseite und einer rückwärtigen Außenseite ausgebildet sind, wobei auf der innenseite eine oder mehrere Hinterschneidungen, Stufen oder Vertiefungen als Krallelemente oder Schubmittel gebildet sind. Ist die flächige Erstreckung in Richtung des Umfangs oder Umrisses des zu erfassenden Erzeugnisses ausreichend breit bzw. groß, dann ergeben sich auf der Basis der genannten Erfindungsausbildung für die Erzeugnisse Kanäle, die ein sicheres und zuverlässiges Stapeln gewährleisten. Eine Stabilität gegen Rütteln oder Vibrationen sowie gegen daraus resultierendes Auseinanderfällen des Stapels ist dabei gefördert.

Im praktischen Dauerbetrieb können Unregelmäßigkeiten in der Erzeugnis- oder Stapelgutform, insbesondere beim aus einem Formwerkzeug ausgeworfenen Becher auftreten. Dies kann zur Beeinträchtigung der Übergabe zwischen Fangund Stapelhaiteeinrichtung führen, wobei sogar miteinander kollidierende Greifkörper von der Fang- und Stapelhalteeinrichtung, gegebenenfalls in Wirkverbindung mit verbliebenen Erzeugnissen oder Stückgütern, zu mechanischen Beschädigungen oder Verfonnungen führen können.

Zur Lösung dieser Problematik wird bei der für die Erfindung vorgesehenen Stapelhalteeinrichtung vorgeschlagen, daß die Grerfklinke um eine Achse frei drehbar gelagert ist, die parallel zum Stapelkanal verläuft. Durch die freie Verdrehbarkeit kann sich die Greifklinke zum Erfassen des Stückguts an dessen Herstellungskontur oder -gestalt weitgehend formbündig oder formschlüssig anschmiegen. Bei der vorherigen Montage der Stapelhalteeinrichtung ist es nicht mehr notwendig, die Grelfklinke in ihrer Drehstellung exakt auszurichten, dies erfolgt vielmehr bei jedem zu stapelnden Stückgut von neuen und selbsttätig. Durch den rotatorischen Freiheitsgrad um eine insbesondere achsparallele Drehachse läßt sich ein Stapeikanal bilden, der sich gleichsam dynamisch an Formabweichungen des Stapelguts in bestimmtem Umfang anpassen kann. Der Stapelkanal "atmet" gleichsam mit den aus Formwerkzeug und Fangeinrichtung herrührenden und dem zu stapelnden Stückgut eingeprägten Formtoleranzen. Es wird der weitere Vorteil erzielt, daß im Falle einer Kollision eines Greifkörpers der Fangeinrichtung mit dem Krallorgan bzw. dessen Greifklinke an der Stapelhalteeinrichtung die Greifklinke in bestimmten Umfang durch entsprechende Drehung ausweichen kann. So ist eine Kollision zwischen Greifkörpern an Fangund Stapelhalteeinrichtung kompensiert und mechanischen Verformungen der Greifkörper vorgebeugt.

Zur weiteren Formstabilisierung der Greifkörper an Fang- und Stapelhalteeinrichtung (Klemmdome bzw. Krallorgane) ist nach einer vorteilhaften Ausbildung der Erfindung die Greifklinke von einer Schutzwandung umgeben, welche derart ausgebildet und mit einem Abstand gegenüber der Greifklinke angeordnet ist, daß die der Greifklinke zugewandte Innenseite der Schutzwandung einen Drehbegrenzungsanschlag mit Drehspiel für die Greifklinke bildet. Damit ist verhindert, daß sich die Greifklinke zu weit gegenüber der optimalen Greifstellung verdrehen kann und dabei ein querstehendes Hindernis für das ankommende Stapelgut bildet und dieses mechanisch verformt.

Nach einer weiteren, zweckmäßigen Ausbildung ist die Drehachse der Greifklinke in der Schutzwandung eingebettet bzw. darin undrehbar gehalten und trägt an ihrem freien, aus der Schutzwandung parallel zum Stapelkanal herausragenden Ende die Greifklinke in frei drehbarer Lagerung.

Um für die Greifklinke ein Drehspiel gegenüber dem Grundkörper der Stapelhalteeinrichtung, insbesondere gegenüber der Schutzwandung, zu ermöglichen, ist es zweckmäßig, die Greifklinkendrehachse mit Arretiermitteln zu versehen, die mit dem Grundkörper bzw. der Schutzwandung der Stapelhalteeinrichtung koppelbar und/oder in Eingriff bringbar sind. Um die Arretiermittel an der Greifklinkendrehachse betätigen zu können, ist nach einer vorteilhaften Ausbildung der Erfindung vorgesehen, daß die Schutzwandung auf ihrer (der Greifklinke zugewandten). Innenseite mit einer zur Drehachse führenden, bevorzugt radial bezüglich dem Stapelkanal verlaufenden Öffnung oder Aussparung versehen ist Darüber können die genannten Arretierungsmittel der Drehachse zu deren Feststellung gegenüber den sonstigen Stapelhalteeinrichtungsmaterial betätigt werden.

Im Rahmen einer Ausgestaltung wird bei der Greifklinke vorgeschlagen, diese mit einer körpereigenen Drehachse zu versehen, die mit einem länglichen Basiskörper realisiert ist, der ein Kopf- und ein Fußende aufweist. Am Kopfende ist ein dem jeweiligen Stapelgut zugeordneter Greifkopf frei drehbar angebracht. Am Fußende und/oder auch im mittleren Bereich des Basiskorpers sind Mittel zur Arretierung an oder gegenüber der Stapelhalteeinrichtung ausgebildet. Durch letztere läßt sich die Greifklinkendrehachse innerhalb des Grundkörpers der Stapelhalteeinrichtung unverdrehbar festlegen. Auf der Drehachse bzw. dem länglichen Basiskörper kann sich dann der Greifkopf gegenüber dem sonstigen Teil der Stapelhalteeinrichtung hin- und herverdrehen.

Damit auch weitere, flexible Freiheitsgrade für den Greifkopf zum Anschmiegen an vielfältige Formen und Konturen des Stapelguts gegeben sind, besteht eine Ausbildung der Erfindung darin, daß der längliche Basiskörper mit elastisch und/oder federnd biegsamen Material hergestellt ist. Es wird gleichsam ein elastisch biegsamer Stiel gebildet, auf dem der Greifkopf aufgrund Einwirkung durch Stapelgüter federnd ausgelenkt und wieder pendelartig in seine Ausgangsstellung zurückgelangen kann.

Mit der erfindungsgemäßen Struktur für die Greifklinke, die im wesentlichen in den Greifkopf und den länglichen, stielartigen Basiskörper als Drehachse untergliedert ist, ist der Weg zu einer weiteren vorteilhaften Ausbildung eröffnet, wonach der Greifkopf am Basiskörper lösbar bzw. abnehmbar montiert sein kann und gleichzeitig auf seiner Greifinnenseite in der dortigen Form oder Krümmung an die Form und/oder Kontur und/oder Krümmung des zu erfassenden Stapelguts angepaßt ist. Der produktions- und lagertechnische Vorteil besteht darin, daß für den länglichen Basiskörper als Drehachse eine für alle Anwendungen passende Standardform beibehalten werden kann. Auf den Basiskörper können dann - je nach Stapelgutform - unterschiedlich geformte bzw. gestaltete Greifköpfe montiert werden.

Zur Realisierung einer einfachen Drehlagerung für den Greifkopf ist es zweckmäßig, diesen auf dem Kopfende Ober eine Schraubverbindung hin- und herdrehbar anzuordnen. Damit das Drehspiel erzielt wird, darf der Greifkopf auf dem Kopfende nicht fest verschraubt bzw. angezogen werden.

Eine zweckmäßige Realisierung der Arretierungsmittel besteht darin, einen manuell schraubbaren Außengewindestift in einer Innengewindebohrung anzuordnen, welche im mittleren Bereich oder am Fußende des Basiskörpers realisiert ist und diesen quer zur Längsachse durchsetzt. Um das Drehspiel zu erhalten, ist in weiterer Ausbildung ein Einschraubbegrenzungsanschlag auf dem Basiskörper für den Greifkopf zweckmäßig. Dieser ist mit einem zum Einschraubgewinde am Kopfende des Basiskörpers (für den Greifkopf) derart bemessenen Abstand angeordnet, daß bei Anschlag bzw. Anliegen des Greifkopfes am Begrenzungsanschlag die Mittelachse der Innengewindebohrung parallel zu einer gedachten Geraden verläuft, welche eine dem Stück- bzw. Stapelgut zugeordnete Seitenoberfläche des Greifkopfes in einem schrägen Winkel durchsetzt. In Verbindung mit der soeben genannten Schraubverbindung zwischen Greifkopf und Kopfende, der radialen Betätigungsöffnung zu den Arretierungsmitteln der Drehachse und dem oben genannten Drehbegrenzungsanschlag wird bei Gewährleistung des Drehspiels für den Greifkopf gleichzeitig verhindert, daß dieser sich vom Basiskörperkopfende herausschrauben kann. Zudem muß, damit eine Betätigung der Arretierungsmittel möglich ist, die Mittelachse der Innengewindebohrung bzw. des Außengewindestiftes mit der Längs- bzw. Zugangsrichtung der Betätigsöffnung oder -aussparung bündig bzw. in einer Flucht bzw. deckungsgleich liegen.

Dadurch ist bei der letztgenannten Erfindungsausbildung das Dreh- und Schraubspiel für den Greifkopf auf dem Basiskörperkopfende immer gewährleistet.

Weitere Merkmale, Einzelheiten, Vorteile und Wirkungen auf der Basis der Erfindung ergeben sich aus der nachfolgenden Beschreibung bevorzugter Ausführungsbeispiele der Erfindung sowie aus den Zeichnungen. Diese zeigen in:
- Fig. 1: eine in radialer Richtung vorgenommene Ansicht auf den achsparallelen Umfang einer rotationssymmetrischen Anordnung aus Fang- und Stapelhalteeinrichtung einer erfindungsgemäßen Aufhahmevorrichtung,
- Fig. 2a und 2b: jeweils eine teilweise längsaxial geschnittene Ansicht einer Ausführung eines Klemmdoms für die Fangeinrichtung,
- Fig. 3: einen axialen Längsschnitt der Stapelhalteeinrichtung gemäß Fig. 1,
- Fig. 4: eine axial vorgenommene Schnittansicht,
- Fig. 5: eine radial vorgenommene Ansicht auf den Umfang einer weiteren Ausführung der erfindungsgemäßen Aufnahmevorrichtung,
- Fig. 6: eine Schnittansicht gemäß Linie VI-VI in Fig. 5,
- Fig. 7: eine Vorderansicht auf eine Fangplatte mit einer Vielzahl von Fangzellen einer weiteren Ausführung der Aufhahmevorrichtung,
- Fig. 8: eine Draufsicht auf die entsprechende Stapelplatte der Aufnahmevorrichtung nach Fig. 7,
- Fig. 9: eine Draufsicht auf eine weitere Ausbildung der Stapelhalteeinrichtung,
- Fig. 10: die Stapelhalteeinrichtung nach Figur 9 im axialen Längsschnitt gemäß Linie X-X in Figur 9,
- Fig. 11: eine Figur 6 entsprechende Schnittansicht der Ausbildung gemäß Figuren 9 und 10,
- Fig. 12: eine Figur 8 entsprechende Draufsicht auf die weitere Ausfuhrungsform der Stapelplatte gemäß Figuren 9-11.

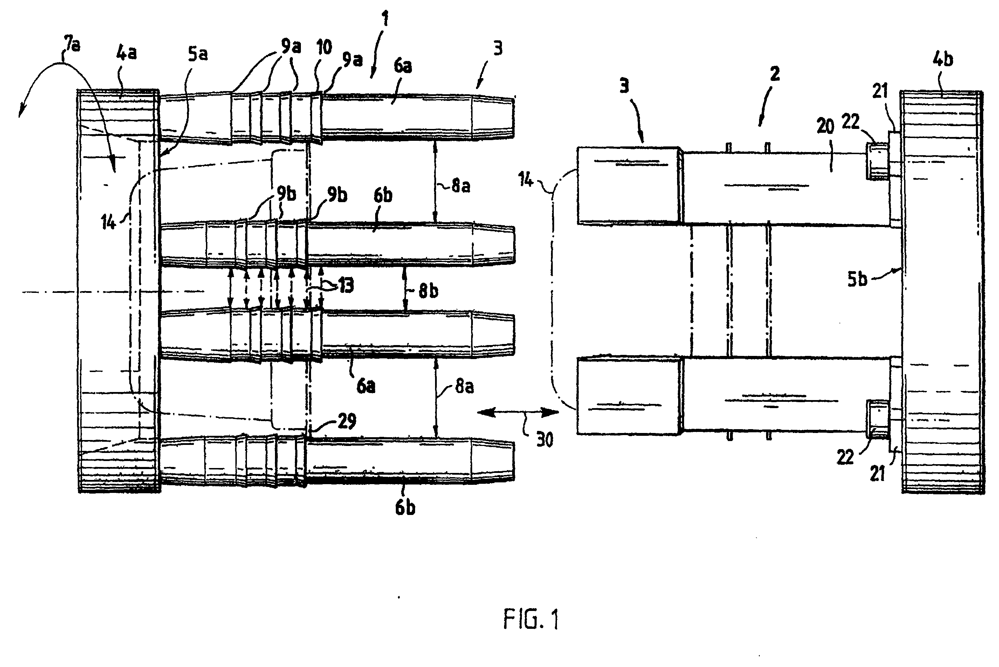

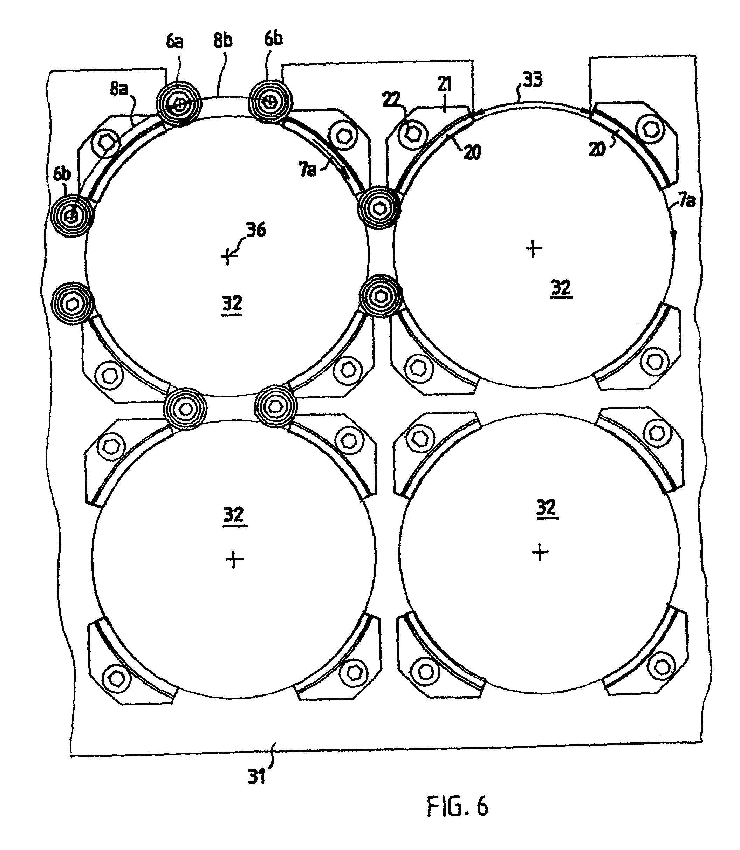

Gemäß Fig. 1 besteht die Aufnahmevorrichtung aus einer Fangeinrichtung 1 und einer Stapelhalteeinrichtung 2, die einander gegenüberliegen. Deren aufeinandergerichtete Greifkörper 3 sind auf einem ersten Tragring 4a oder einer Tragplatte mit Durchbruch der Fangeinrichtung 1 und einem zweiten Tragring 4b oder einer Tragplatte mit Durchbruch der Stapelhatteeinrichtung 2 über deren jeweilige, gegenüberliegende Stirnseiten 5a, 5b verteilt befestigt. Die Gretfkörper 3 der Fangeinrichtung 1 sind als von der Stirnseite 5a vorspringende Klemmdome 6a, 6b mit rundlichem Grundquerschnitt realisiert. Wie auch die weiter unten erläuterte Fig. 6 erkennen läßt, sind insgesamt acht Klemmdome 6a, 6b vorgesehen. Sie weisen voneinander in Umfangsrichtung 7a des Tragrings 4a abwechselnd einen ersten, größeren Abstand 8a und einen zweiten kleineren Abstand 8b voneinander auf. So bilden sich vier Gruppen mit jeweils einem Klemmdornpaar 6a, 6b. Die beiden, paarweise gruppierten und den kleineren Abstand 8b voneinander ausweisenden Klemmdome 6a, 6b unterscheiden sich voneinander im wesentlichen durch eine Anzahl von vier Schnappstufen 9a einerseits und von drei Schnappstufen 9b andererseits.

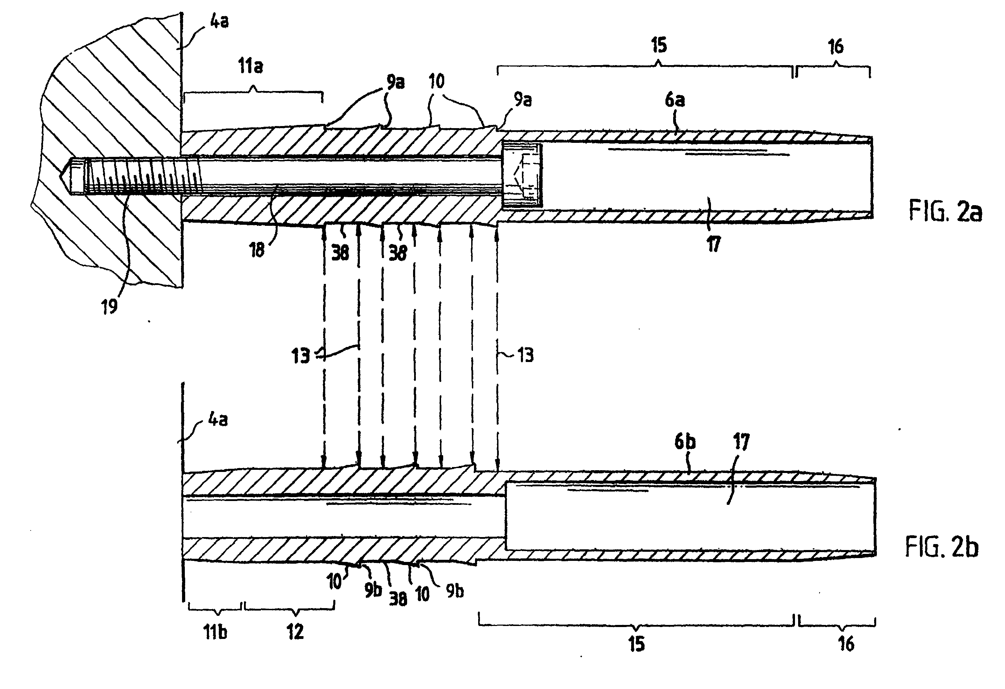

In Fig. 2a und Fig. 2b sind diese vergrößert dargestellt. Die Schnappstufen 9a, 9b bilden jeweils den Abschluß von rampenartigen Umfangserweiterungen 10, allerdings mit einer Ausnahme: Bei dem Klemmdorn 6a mit vier Schnappstufen 9a bildet die erste Schnappstufe 9a, die dem Tragring 4a am nächsten liegt, den Abschluß eines sich vom Tragring 4a aus kontinuierlich in axialer Richtung erweiternden Umfangsabschnitts 11a. Beim Klemmdom 6b mit drei Schnappstufen 9b dagegen ist ein gleichartiger, sich vom Tragring 4a aus erweiternder Umfangsabschnitt 11b vorgesehen, der in einen achsparallelen Umfangsabschnitt 12 übergeht. An diesen schließt sich - in weiterer Entfernung vom Tragring 4a - die erste der bereits genannten rampenartigen Umfangserweiterungen 10 an. Wie mit gestrichelten Linien 13 angedeutet, sind die Schnappstufen 9a des einen Klemmdoms 6a gegenüber den Schnappstufen 9b des anderen Klemmdoms 6b axial versetzt. Gemäß gezeichnetem Beispiel ergeben sich damit insgesamt sieben Einschnappmöglichkeiten für einen (in Fig. 1 strichpunktiert angedeuteten) Kunststoffbecher 14. Indem also einer Schnappstufe 9a, 9b eines Klemmdoms 6a stets ein achsparalleler Umfangsabschnitt 38 des jeweils anderen Klemmdorns 6b gegenüberliegt, wird ein zu starkes Einklemmen und damit eine Deformation des Kunststoffbechers 14 vermieden, wenn dieser aus einem Formwerkzeug zwischen die Klemmdome 6a, 6b der Fangeinrichtung 1 gestoßen wird. Gemäß Fig. 2a und 2b schließt sich - von dem Tragring 4a aus gesehen - nach dem Bereich mit den Schnappstufen 9a, 9b ein achsparalleler Außenumfangsabschnitt 15 auf den Klemmdomen 6a, 6b an. Deren freie Enden sind von einem konischen Verjüngungsabschnitt 16 gebildet. Die Klemmdome 6a, 6b sind hohlzylindrisch mit einem Hohlraum 17 ausgebildet. Darin ist eine Befestigungsschraube 18 eingeführt, die im wesentlichen den Bereich mit den Schnappstufen 9a, 9b und mit dem Tragring 4a einschließlich durchsetzt. Der Eingriff mit dem Inneren des Tragrings 4a erfolgt über ein entsprechendes Innengewinde und einem Außengewinde 19 der Befestigungsschraube 18.

Gemäß Fig. 1 sind die Greifkörper 3 der Stapelhalteeinrichtung 2 durch Kraltvorsprünge 20 realisiert, die über einen L-artig nach außen abgewinkelten Befestigungsflansch 21 und einer diesen durchsetzenden Befestigungsschraube 22 am zugeordneten Tragring 4b fixiert sind. Wie auch die zusätzliche Betrachtung von Fig. 6 zeigt, sind die Krallvorsprünge 20 in Umfangsrichtung 7a derart gekrümmt flächig erstreckt, daß sie - grob abgeschätzt - etwa ein Drittel der Außenumfangsfläche eines aufgenommenen Kunststoffbechers 14 abdecken können.

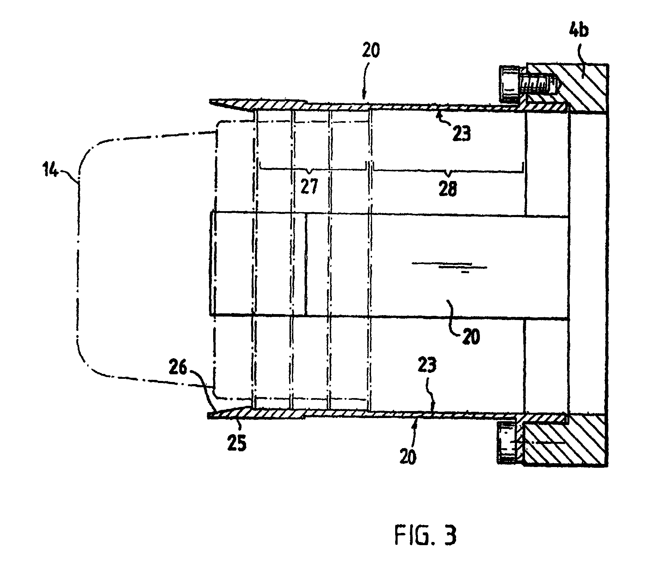

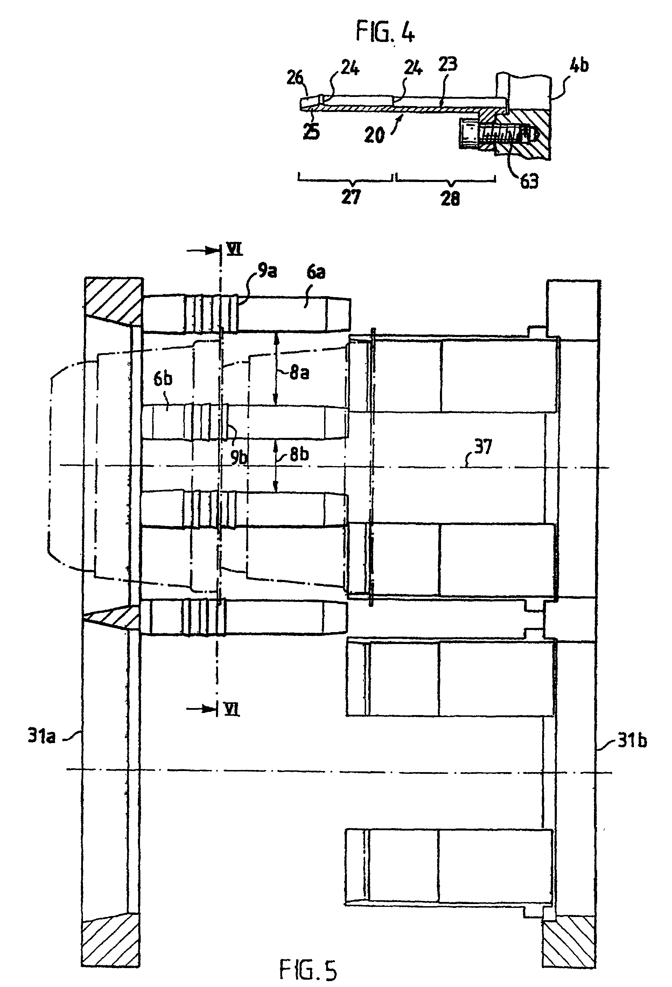

Die Krallwirkung wird aus der Schnittdarstellung gemäß Fig. 3 und 4 besonders deutlich. An der Innenseite 23 des Krallvorsprungs 20 sind wenigstens zwei Widerhakstufen 24 ausgebildet. Die dem freien Ende 25 des Krallvorsprungs 20 nächstliegende Widerhakstufe 24 bildet den Abschluß eines innenseitigen Eingangsrampenabschnitts 26, der mit zunehmender Nähe zum Tragring 4b am Eingang der Stapelhalteeinrichtung eine Verjüngung bzw. Verengung des für den Kunststoffbecher 14 zur Verfügung stehenden Aufnahmevolumens innerhalb der im Beispiel vier Krallvorsprünge 20 bewirkt.

An der dem freien Ende 25 nächstliegenden Widerhakstufe 24 schließt sich ein erster, achsparalleler innenseitenabschnitt 27 an, der durch die zu dem Tragring 4b nächstliegende Widerhakstufe 24 abgeschlossen wird. An diese schließt sich ein zweiter, ebenfalls achsparalleler Innenseitenabschnitt 28 an, der aufgrund der Abstufung einen größeren Innendurchmesser als der erste Innenseitenabschnitt 27 begrenzt.

Zur Funktionsweise der erfindungsgemäßen Aufnahmevorrichtung und insbesondere zum Zusammenspiel von deren Fang- und Stapelhalteeinrichtungen 1, 2 sei folgendes ausgeführt: Gemäß Fig. 1 sind in Umfangsrichtung 7a die Krallvorsprünge 20 der Stapelhalteeinrichtung 2 gegenüber den Klemmdornpaaren 6a, 6b der Fangeinrichtung 1 derart versetzt angeordnet, daß jeder Krallvorsprung 20 zwischen zwei Klemmdome 6a, 6b, die den größeren Abstand 8a voneinander aufweisen, eingeschoben werden kann. Die flächige Erstreckung in Umfangsrichtung 7a ist bei den Krallvorsprüngen 20 insbesondere oder auch nach diesem Gesichtspunkt bemessen. Befinden sich die Fangeinrichtung 1 und die Stapelhalteeinrichtung 2 im auseinander gefahrenen Zustand, kann in der ersten Phase des Aufnahmevorgangs der Kunststoffbecher 14 aus dem (nicht gezeichneten) Kunststoff-Formwerkzeug ausgestoßen und zunächst durch den Tragring 4a der Fangeinrichtung zwischen deren Klemmdome 6a, 6b gestoßen werden. Dabei gleitet der Becher 14 vorzugsweise mit seinem nach außen gestülpten Öffnungsrand 29 zunächst entlang der ersten Umfangsabschnitte 11a, 11b (vgl. Fig. 2a, 2b), dann teilweise auf dem achsparallelen Umfangsabschnitt 12 des Klemmdoms 6b mit drei Schnappstufen 9b solange, bis er hinter der ersten, zweiten, usw. Schnappstufe 9a, 9b zum Stillstand kommt. Der Becher ist dann aufgrund der jeweils entgegenstehenden Schnappstufe nicht mehr zurückbewegbar, und eine weitere Bewegung In Richtung zu den freien Enden der Klemmdome 6a, 6b würde einen weiteren Druck auf den Becher 14 in Richtung zur Stapelhalteeinrichtung 2 erfordern, um die einen oder mehreren Umfangserweiterungen 10 auf den Klemmdornen 6a, 6b zu überwinden. Dies wird in der zweiten Phase von den Krallvorsprüngen 20 der Stapelhalteeinrichtung 2 mittels deren Widerhakstufen 24 bewerkstelligt. Dazu taucht die Stapelhalteeinrichtung 2 mit ihren Krallvorsprüngen 20 in die freien Räume der größeren Abstände 8a zwischen den Klemmdornen 6a, 6b. Dies wird zweckmäßig dadurch realisiert, daß der Fangeinrichtung 1 abwechselnd eine Hinund Herbewegung 30 zwischen dem (nicht gezeichneten) Formwerkzeug und der stillgehaltenen Stapelhatteeinrichtung 2 erteilt wird. Im eingetauchten Zustand, wenn die Fang- und Stapelhalteeinrichtung 1, 2 mit ihren Greifkörpern 3 ineinandergefahren sind, hintergreifen die Krallvorsprünge 20 mit ihren Widerhakstufen 24 den Becher 14 an seinem Öffnungsrand 29, nachdem dieser am innenseitigen Eingangsrampenabschnitt 26 des freien Endes 25 des Krallvorsprungs 20 im Zuge der Bewegung 30 der Fangeinrichtung 1 auf die Stapelhalteeinrichtung 2 entlang geglitten ist. Wird nun die Bewegung 30 zum Auseinanderfahren von Fang- und Stapelhalteeinrichtung 1, 2 umgekehrt, wird der Becher-Öffnungsrand 29 zwischen den Krallvorsprüngen 20 an deren Widerhakstufen 24 festgehalten; gleichzeitig kommt es zur Überwindung der rampenartig ansteigenden Umfangserweiterungen 10 auf den Außenmantelflächen der Klemmdome 6a, 6b, was nur zu einem geringfügigen, reversiblen Deformieren des Becheröffnungsrandes 29 führt. Sind die Fangeinrichtung 1 und die Stapelhalteeinrichtung 2 vollständig auseinandergefahren, ist der vorher zwischen den Klemmdomen 6a, 6b erfaßte Kunststoffbecher nur noch von den Krallvorsprüngen 20 erfaßt. Im Rahmen eines weiteren Becherübemahmetaktes mit erneutem Ineinanderfahren von Fang- und Stapelhalteeinrichtung 1, 2 wird zwar der zuletzt zwischen den Krallvorsprüngen 20 aufgenommene Becher 14 wieder zwischen die Klemmdome 6a, 6b der Fangeinrichtung zurück bewegt; jedoch führen der konische Verjüngungsabschnitt 16 (der sich mit zunehmender Nähe zum Tragring 4a verbreitert) und/oder wenigstens die vom Tragring 4a am weitesten entfernte Schnappstufe 9a zu einer weiteren Verschiebung des Bechers 14, der zunächst von der dem freien Ende 25 des Krallvorsprungs 20 nächstliegenden Widerhakstufe 24 gehaltenen war, in Richtung zum Tragring 4b der Stapelhalteeinrichtung 20. Diese (wiederholte) Verschiebung ergibt mit jedem Übemahmezyklus oder -takt eine Vergrößerung des sich innerhalb der Krallvorsprünge bildenden Becherstapels. Eine Rückbewegung in Richtung zur Fangeinrichtung 1 bzw. zum davor angeordneten Formwerkzeug ist durch die beiden Widerhakstufen 24 verhindert. Beim Ineinanderfahren von Fang- und Stapelhalteeinrichtung 1, 2 kommt der zuletzt in der Stapelhalteeinrichtung aufgenommene Becher 14, der sich unmittelbar an der dem freien Ende 25 nächstliegenden Widerhakstufe 24 befindet, mit dem zuletzt aus dem Formwerkzeug ausgestoßenen und zwischen den Klemmdomen 6a, 6b befindlichen Becher 14 nicht in Berührung. Letzterer ist also von einer Stapelverschlebung der zwischen den Krallvorsprüngen 20 gestapelten Becher 14 entkoppelt und wird dadurch nicht deformiert. Bei dem erfindungsgemäßen Übernahmeablauf ist als Zwischenstation lediglich die Fangeinrichtung notwendig.

Gemäß Fig. 5 und 6 ist die Fang- und Stapelhalteeinrichtung jeweils mit einer Grundplatte 31a, 31b realisiert, die "brillenartig" von einer Mehrzahl gleichartiger Aufnahmezellen 32 durchsetzt ist. Jede Zelle umfaßt den von den Klemmdornen 6a, 6b umgebenen Aufnahmeraum und den damit fluchtenden, von dem Krallvorsprüngen 20 umgebenen Aufnahmeraum. Der zeichnerischen Vereinfachung halber sind lediglich die Klemmdome 6a, 6b einer Aufnahmezelle 32 gezeichnet. Im übrigen bezeichnen die in Fig. 5 und 6 eingetragenen Bezugsziffern mit in Fig. 1-4 übereinstimmende Teile. Es ist ferner erkennbar, daß der Umfangsabstand 33 zwischen zwei Krallvorsprüngen 20 etwa dem Winkelumfang entspricht, den ein Paar mit Klemmdomen 6a, 6b unterschiedlicher Anzahl an Schnappstufen 9a, 9b und kleinerem Abstand 8b voneinander einnimmt.

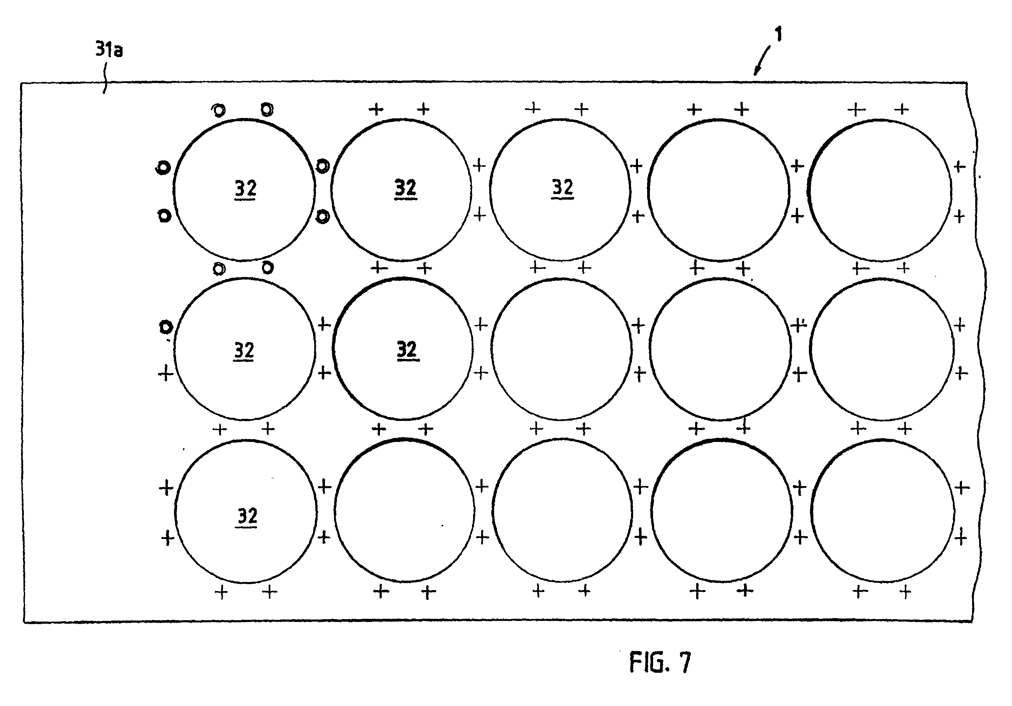

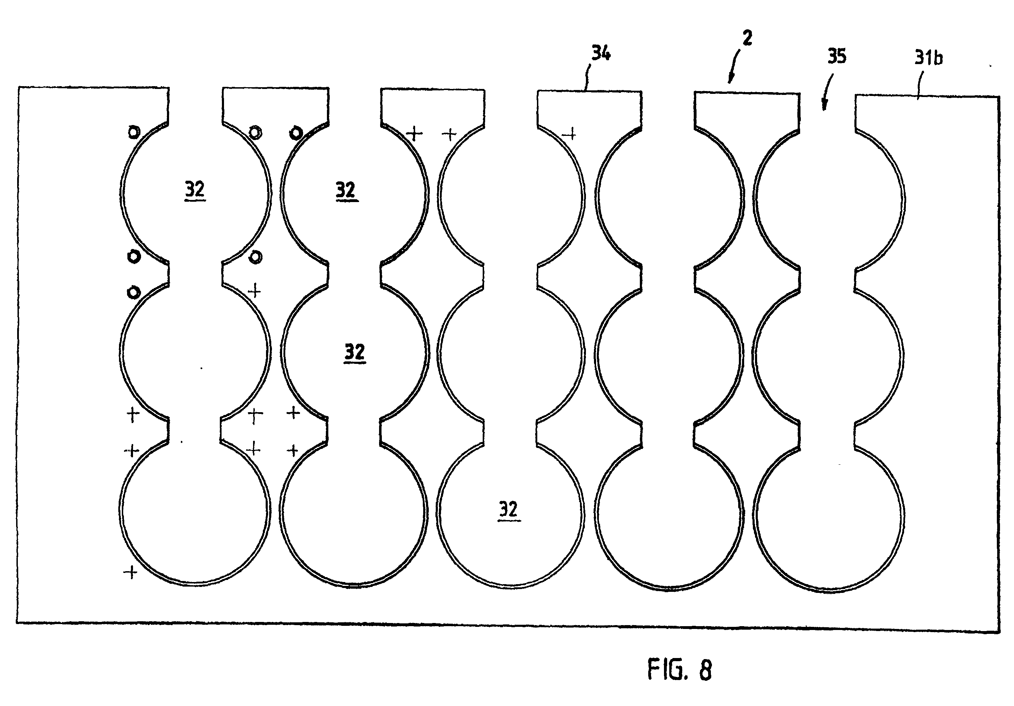

Gemäß Fig. 7 und 8 können in den Grundplatten 31a, 31b eine Vielzahl von Aufnahmezellen 32 angeordnet sein. Die Grundplatte 31b der Stapelhalteeinrichtung bzw. "Stapelbrille" 2 ist zumindest an einem oberen Rand 34 mit Aussparungen 35 versehen, welche Durchgänge für einen an sich bekannten (nicht gezeichneten) Ausschieberechen zum Entfernen von Becherstapeln aus der Stapelhalteeinrichtung 2 schaffen. Im Vergleich dazu sind bei der Grundplatte 31a der Fangeinrichtung bzw. "Fangbrille" 1 solche Aussparungen bzw. Durchbrüche in die Aufhahmezellen 32 nicht notwendig, was die mechanische Gesamtstabilität der Grundplatte 31a erhöht.

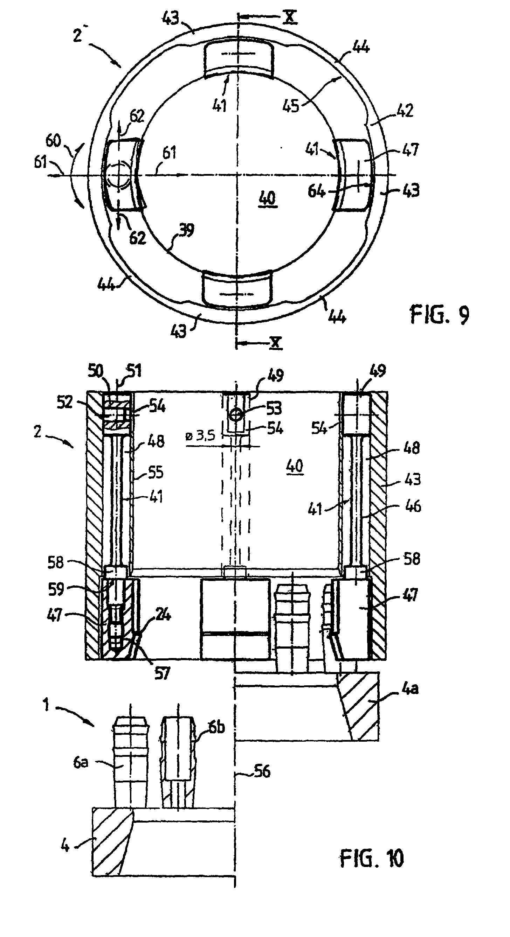

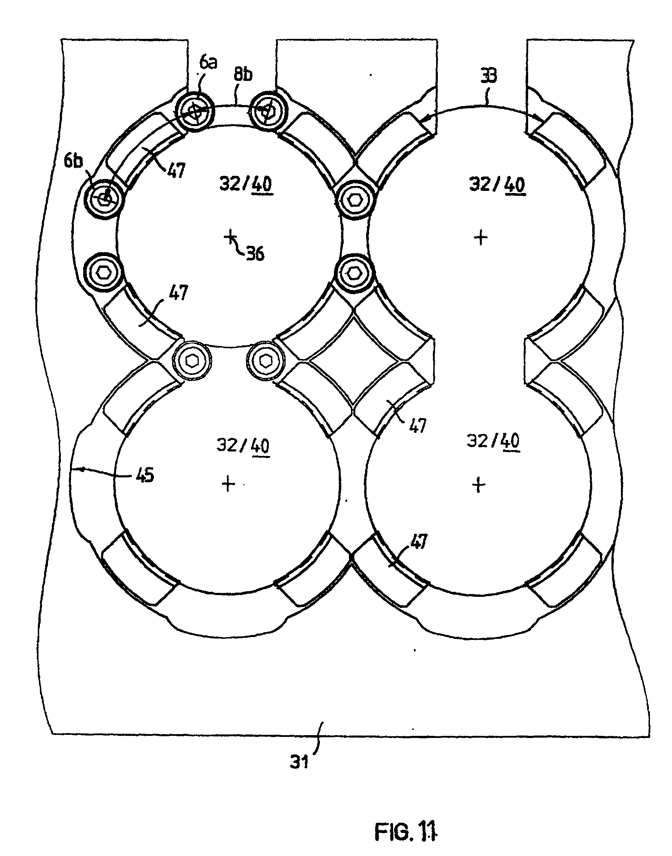

In Figur 9 und 10 ist eine besondere, erfindungsgemäße Ausbildung der Stapelhalteeinrichtung 2 dargestellt. Diese ist wesentlich von einem Krallorgan 39 mit etwa ringförmiger bzw. hohlzylindrischer Grundform ausgemacht. Dieses definiert bzw. umgrenzt einen Stapelkanal 40 zylindrischen Querschnittes. Es umfaßt an den Stapelkanal 40 unmittelbar angrenzende, im Beispiel vier Greifklinken 41 sowie eine etwa ring- bzw. hohlzylindrische Schutzwandung 42, welche die Greifkfinken 41 von außen umgibt. Über ihren Umfang gleichmäßig verteilt weist die Schutzwandung 42 abwechselnd dickere Mantelabschnitte 43, welche eine Greifklinke 41 unmittelbar von außen radial abdecken, und dünnere Mantelabschnitte 44 auf. Die dünneren Mantelabschnitte 44 sind durch innenseitige Aussparungen bzw. Einbuchtungen 45 gebildet Diese schaffen Platz zum Eintauchen der Klemmdome 6a,6b auf dem Tragring 4a der Fangeinrichtung 1, wie in Figur 10, rechte Hälfte, dargestellt.

Gemäß Figur 10 besitzen die Greifklinken 41 die Grundstruktur eines federnden Pendels. Die Greifklinke 41 umfaßt einen etwa stielartig ausgebildeten Basisachskörper 46, worauf ein Greifkopf 47 mit wenigstens einer Widerhakstufe 24 montiert ist. Der Basisachskörper ist beispielsweise aus federndem Stahl oder Metall hergestellt und mit seiner stielartigen Grundform in einer Aufnahmetasche 48 untergebracht, die innenseitig jeweils am dickeren Mantelabschnitt 43 der Schutzwandung 42 als radial nach innen vorspringender Hohl-Ansatz angeformt ist Der Basisachskörper 46 besitzt ein verbreitertes oder radial aufgeweitetes Fußende 49, das von einer Innengewindebohrung 50 quer zur Längsrichtung 51 des Basisachskörpers 46 durchsetzt ist. Im bzw. mit der Innengewindebohrung 50 kämmt ein Außengewindestift 52, der Ober eine Betätigungsöffnung 53 für einen Mehrkantschraubschlüssel zur manuellen Verdrehung zugänglich ist. Mit der Betätigungsöffnung 53 deckt sich eine Aussparung 54 im Randbereich der s Innenwand 55 der Aufnahmetasche 48. Die Aussparung verläuft bezüglich der Mittelachse 56 des Stapelkanals 40 etwa radial. Dadurch ist gewährleistet, daß der Außengewindestift 52 nur dann zur Arretierung des Basisachskörpers 46 gegenüber der Schutzwandung 42 zugänglich ist, wenn er mit seiner Längsachse deckungsgleich mit der Aussparung 54 und damit ebenfalls radial liegt sowie eine definierte Drehstellung einnimmt. Das Kopfende des Basisachskörpers 46 ist durch ein Außengewinde 57 gebildet, über das der Greifkopf 47 mit einem komplementären Innengewinde aufschraubbar ist. Das Einschrauben des Greifkopfes 47 wird durch einen Begrenzungsanschlag 58 in axialer Richtung beschränkt, der im Beispiel als radiale Aufweitung oder Wulst gestaltet und im Bereich oder nächster Nähe zum Kopfende bzw. Außengewinde 57 des Basisachskörpers 46 angeordnet ist. Der Abstand der Anschlagseite 59 des Begrenzungsanschlags 58 zum Kopfend-Außengewinde 57 ist in Achsrichtung derart bemessen, daß bei maximal möglicher Einschraubtiefe unter Aufliegen des Begrenzungsanschlages 58 mit seiner Anschlagseite 59 auf der zugewandten Unterseite des Greifkopfes 47 die Innengewindebohrung 50 des Fußendes 49 nebst darin kämmenden Außengewindestift 52 und Betätigungsöffnung 53 gegenüber der radialen Stellung zur Stapelkanalmittelachse 56 verstellt bzw. verdreht ist. In dieser Stellung ist es nicht möglich, manuell mit einem Mehrkantschlüssel durch die Aussparung 54 und Betätigungsöffnung 53 einzugreifen und den Außengewindestiff 52 so zu verdrehen, daß er gegen die Innenseite der Schutzwandung 42 innerhalb der Aufnahmetasche 48 drückt und so dem Basisachskörper feststellt und vor Verdrehung sichert. Erst wenn das Kopfende mit Außengewinde 57 des Basisachskörpers 46 vom Greifkopf 47 durch Zurückschrauben so gelockert ist, daß ein gewisser Abstand zwischen der Anschlagseite 59 des Begrenzungsanschlags 58 und der zugewandten Unterseite des Greifkopfs 47 besteht, können die Betätigungsöffnung 53 und der Außengewindestift 52 mit der radialen Aussparung 54 in der Innenwand 55 der Aufnahmetasche 48 so fluchten bzw. sich decken, daß eine manuelle Betätigung des Außengewindestifts 52 mit einem Mehrkantschlüssel möglich ist.

Gemäß Figur 9 hat das soeben erläuterte, nur lockere Aufschrauben des Greifkopfs 47 (ohne Anziehen und Feststellen gegenüber Verdrehen) die Wirkung einer freien Drehlagerung: Je nach Formtoleranzen eines aufzunehmenden Serienerzeugnisses oder Stapelgutes werden dem Greifkopf 47 Kräfte und Drehmomente erteilt, die durch eine freie Drehung 60 um die Längsrichtung bzw. Längsachse 51 des Basiskörpers 46 ausgeglichen werden können. In Figur 9 verläuft die genannte Längs- bzw. Drehachse 51 senkrecht zur Zeichenebene. Da zudem die Greifklinke 41 einen stielartig aus federndem Material gefertigten Basisachskörper 46 aufweist, können dem Greifkopf 47 elastisch federnde Pendelbewegungen 61, 62 sowohl in radialer Richtung von und zur Stapelkanalmittelachse 56 als auch tangential zur Umfangsrichtung der zylindrischen Grundform der Stapelhalteeinrichtung 2 erteilt werden. Dies erhöht die Effektivität des selbsttätigen Anschmiegens der Greifköpfe 47 an zu erfassendes Stapelgut. Die innenseite der Schutzwandung 42 im dickeren Mantelabschnitt 43 bildet dabei einen Drehbegrenzungsanschlag 64, wodurch ein Ausschrauben des Greifkopfes 47 vom Kopfende des Basisachskörpers 46 verhindert ist. ist die Greifklinke 41 aus bestimmten Gründen (Verschleiß, Beschädigung oder Umstellung auf anders gestaltetes Stapelgut) auszuwechseln, kann dies durch Lockern des Außengewindestiftes 52 gegenüber der Schutzwandung 42 und durch Herausziehen der Greifklinke 41 anhand des Greifkopfes 47 aus der Aufnahmetasche 48 schnell und einfach erfolgen. Die Neumontage einer Ersatzgreifklinke ist ebenfalls schnell und problemtos möglich, wobei lediglich die Betätigungsöffnung 53 am Fußende des Basisachskörpers 46 mit der radialen Aussparung 54 an der Aufnahmetaschen-Innenwandung 55 deckungsgleich bzw. fluchtend auszurichten ist, damit der Basisachskörper 46 an der Schutzwandung 42 abgestützt bzw. festgestellt werden kann. Ein weiteres Ausrichten oder Justieren des Greifkopfes 47 erübrigt sich, weil dieses im laufenden Betrieb aufgrund der Drehbewegungen 60 auf der freien Schraublagerung über das Kopfend-Außengewinde 57 selbsttätig je nach Abweichung innerhalb bestimmter Formtoleranzen des Stapelguts erfolgen kann.

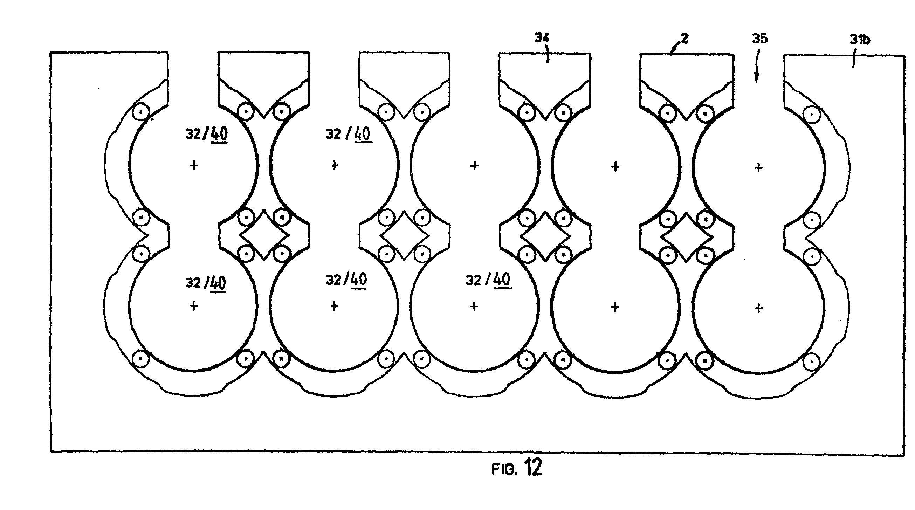

Die obigen Ausführungen gelten für die Figuren 11 und 12 analog, wobei insbesondere auf die Beschreibung der Figuren 6 und 8 mit dabei verwendeten Bezugszeichen verwiesen werden kann.

### Bezugszeichenliste

- 1: Fangeinrichtung
- 2: Stapeleinrichtung
- 3: Greifkörper
- 4a, 4b: Tragring
- 5a, 5b: Stirnseite
- 6a, 6b: Klemmdom
- 7a: Umfangsrichtung
- 8a: großer Abstand
- 8b: kleiner Abstand
- 9a, 9b: Schnappstufe
- 10: Umfangserweiterung
- 11a, 11b: Umfangsabschnitt
- 12: achsparalleler Umfangsabschnitt
- 13: Linien
- 14: Kunststoffbecher
- 15: achsparalleler Umfangsabschnitt
- 16: konischer Verjüngungsabschnitt
- 17: Hohlraum
- 18: Befestigungsschraube
- 19: Außengewinde
- 20: Krallvorsprünge
- 21: Befestigungsflansch
- 22: Befestigungsschraube
- 23: Innenseite
- **24**: Widerhakstufen
- 25: freies Ende
- 26: Rampenabschnitt
- 27: achsparalleler, erster Innenabschnitt
- 28: achsparalleler, zweiter Innenabschnitt
- 29: Öffnungsrund des Bechers
- 30: Hin- und Herbewegung
- 31a, 31 b: Grundplatte
- 32: Aufnahmezelle
- 33: Umfangsabstand
- 34: oberer Rand
- 35: Aussparung
- 36: Symmentrielement
- 37: Symmentrielement
- 38: achsparalleler Umfangsabschnitt
- 39: Krallorgan
- 40: Stapelkanal
- 41: Greifklinke
- 42: Schutzwandung
- 43: dickerer Mantelabschnitt
- 44: dünnerer Mantelabschnitt
- 45: Einbuchtung
- 46: Basisachskörper
- 47: Greifkopf
- 48: Aufnahmetasche
- 49: Fußende
- 50: Innengewindebohrung
- 51: Längsrichtung
- 52: Außengewindestift
- 53: Betätigungsöffnung
- 54: Aussparung
- 55: Innenwand
- 56: Mittelachse
- 57: Außengewinde
- 58: Begrenzungsanschlag
- 59: Anschlagseite
- 60: Drehung
- 61: radiale Pendelbewegung
- 62: tangentiale Pendelbewegung
- 63: Schraubmittel
- 64: Drehbegrenzungsanschlag

## Patentansprüche

1. Verfahren zur Aufnahme von Serien-Stück- oder Stapelgütern oder - Erzeugnissen (14), insbesondere Kunststoff-Bechern, die nach ihrer Bildung in einem Form- und/oder Stanz-Werkzeug, daraus ausgeworfen werden, mit einer Greifkörper (3) mit Schubmittel (9a,9b) aufweisenden Fangeinrichtung (1), mit der die ausgeworfenen Erzeugnisse erfaßt werden, und mit einer Greifkörper (3) mit Ziehmitteln (24) aufweisenden Stapelhalteeinrichtung (2), welche die Erzeugnisse (14) aus der Fangeinrichtung (1) erhält und aneinandergereiht für den Weitertransport verfügbar hält, wobei die Fang- und die Stapelhalteeinrichtung (1,2) aufeinander- und auseinander bewegt (30) werden, und die Stapelhalteeinrichtung (2) bei der Aufeinanderbewegung zum Ergreifen des oder der Erzeugnisse (14) in der Fangeinrichtung (1) verwendet wird, **dadurch gekennzeichnet, dass** bei der Aufeinanderbewegung die Fang- und Stapelhalteeinrichtung (1,2) mit ihren Greifkörpern (3) ineinander gefahren und/oder voneinander durchsetzt oder durchdrungen werden und dabei ein zuletzt in die Fangeinrichtung (1) ausgeworfenes Erzeugnis (14) mittels der Schubmittel (9a,9b) in die Stapelhalteeinrichtung (2) geschoben wird, und bei der Auseinanderbewegung das zuletzt in die Fangeinrichtung (1) ausgeworfene Erzeugnis (14) mittels der Ziehmittel (24) der Stapelhalteeinrichtung (2) aus der Fangeinrichtung (1) herausgezogen wird.

2. Verfahren nach Anspruch 1, **dadurch gekennzeichnet, dass** bei der Aufeinanderbewegung ein bereits in der Stapelhalteeinrichtung (2) befindliches Erzeugnis (14) von den Schubmitteln (9a,9b) der Fangeinrichtung (1) weiter zur Stapelung verschoben wird

3. Verfahren nach Anspruch 1 oder 2, **dadurch gekennzeichnet, dass** bei der Aufeinderbewegung ein vorher in der Stapelhalteeinrichtung bereits ergriffenes oder befindliches Erzeugnis (14) mittels der Schubmittel (9a,9b) der Fangeinrichtung (1) in der Stapelhalteeinrichtung (2) derart weiter verschoben wird, dass das in der Stapelhalteeinrichtung (2) jeweils zuletzt ergriffene Erzeugnis (14) für den Zeitraum wenigstens einer zusammenhängenden Auseinander- und Aufeinderbewegung (30) bis zum Ergreifen eines nächsten Erzeugnisses unberührt von vorher ergriffenen Erzeugnissen gehalten wird.

4. Verfahren nach Anspruch 1, 2 oder 3, **dadurch gekennzeichnet, dass** im Rahmen eines Übernahmetaktes für das Kunststofferzeugnis (14) vom Form- und/oder Stanzwerkzeug in die Stapelhalteeinrichtung (2) in einer ersten Phase das Kunststofferzeugnis (14) aus dem Form- und/oder Stanzwerkzeug direkt mittels der Fangeinrichtung (1) ergriffen und in einer zweiten Phase eine Übergabe des Kunststofferzeugnisses (14) aus der Fangeinrichtung (1) direkt in die Stapelhalteeinrichtung (2) erfolgt, so dass die Fangeinrichtung (1) eine einzige Zwischenstation zwischen dem Formund/oder Stanzwerkzeug und der Stapelhalteeinrichtung (2) bildet.

5. Verfahren nach Anspruch 4, **dadurch gekennzeichnet, dass** das Bewegen (30) der Fangeinrichtung (1) in der ersten Phase und in der zweiten Phase ausschließlich linear beziehungsweise geradlinig erfolgt.

6. Vorrichtung zur Aufnahme von Serien-Erzeugnissen (14), insbesondere Kunststoff-Bechern, die nach ihrer Bildung in einem Form- und/oder Stanz-Werkzeug daraus ausgeworfen werden, mit einer dem Werkzeug zugeordneten Fangeinrichtung (1), um die Erzeugnisse (14) aus dem Werkzeug zu erfassen, und einer der Fangeinrichtung nachgeordneten Stapelhalteeinrichtung (2), in der die Erzeugnisse (14) übernehmbar und aneinandergereiht für den Weitertransport verfügbar gehalten sind, wobei die Fang- und die Stapelhalteeinrichtung (1,2) aufeinander zu- und voneinander wegbewegbar (30) sind und zueinander vorspringende Greifkörper (3) zum lösbaren Erfassen der Erzeugnisse (14) aufweisen, und die Greifkörper mit Schub- und Ziehmitteln (9a,9b;24) für die Erzeugnisse derart ausgebildet sind, dass mit dem Bewegen (30) der Fang- und Stapelhalteeinrichtung zuund voneinander eine Übernahme mittels Schieben, Ergreifen und Herausziehen der Erzeugnisse (14) aus der Fang- in die Stapelhalteeinrichtung (1,2) stattfinden kann, insbesondere zur Durchführung des Verfahrens nach einem der vorangehenden Ansprüche, **dadurch gekennzeichnet, dass** sowohl die Fang- als auch die Stapelhalteeinrichtung (1,2) jeweils mit einem Tragring (4a,4b) oder einer Tragplatte mit Durchbruch ausgebildet sind, und an den gegenüberliegende Stirnseiten (5a,5b) der Tragringe (4a,4b) oder Tragplatten die Greikörper (3) jeweils verteilt befestigt und dabei so gegeneinander versetzt angeordnet sind, dass die Fang- und Stapelhalteeinrichtung (1,2) sich im Zuge ihrer Bewegung (30) auf- und/oder aneinander mit ihren jeweiligen Greifkörpem (3) gegenseitig durchsetzen, durchdringen und/oder ineinander fahren.

7. Vorrichtung nach Anspruch 6, **dadurch gekennzeichnet, dass** bei den Greifkörpern (3) der Fangeinrichtung (1) jeweils mehrere gestaffelte beziehungsweise nacheinander angeordnete Schubmittel (9a,9b) zum direkten Angriff an je einem Erzeugnis (14) derart angeordnet sind, dass für das zuletzt in die Stapelhalteeinrichtung übernommene Erzeugnis (14) ein Abstand zum Stapel früher übernommener Erzeugnisse (14) eingehalten wird.

8. Aufnahmevorrichtung nach Anspruch 6 oder 7, **dadurch gekennzeichnet, dass** die Greifkörper (3) der Fangeinrichtung (1) längs eines Profils oder Grundrisses angeordnet sind, das dem Umfang, Umriß oder der sonstigen Gestalt des aufzunehmenden Erzeugnisses (14) entspricht.

9. Aufnahmevorrichtung nach einem der Ansprüche 6-8, **dadurch gekennzeichnet, dass** die Greifkörper (3) mit Hänge-, Klemm-, Rast-, Schnapp-, und/oder Hakenelementen (9a,9b) versehen sind, die zum lösbaren Eingriff mit dem zu erfassenden Erzeugnis (14) ausgebildet sind.

10. Aufnahmevorrichtung nach einem der Ansprüche 6 bis 9, **dadurch gekennzeichnet, dass** auf unterschiedlichen Greifkörpem (3) Hänge-, Klemm-, Rast-, Schnapp-, und/oder Hakenelementen (9a,9b) und/oder die Krall-, Widerhalt-, . Widerhakelemente oder sonstigen Zieh- und/oder Schubmittel (9a,9b;24) in Richtung von der Fang- zur Stapelhalteeinrichtung (1,2) gegeneinander versetzt zum lösbaren Eingriff mit dem zu erfassenden Erzeugnis (14) angeordnet sind.

11. Aufnahmevorrichtung nach einem der Ansprüche 6-10, **dadurch gekennzeichnet, dass** die Greifkörper mit Krall-, Widerhalt-, Widerhakelementen oder sonstigen Zieh- und/oder Schubmitteln (24) derart ausgebildet sind, dass im Zuge der Auseinanderbewegung (30) von Fang- und Stapethalteeinrichtung (1,2) den erfaßten Erzeugnissen (14) eine Schiebe- oder Schubkraft in Richtung von der Fang- zur Stapelhalteeinrichtung (1,2) erteilt wird.

12. Aufnahmevorrichtung nach einem der Ansprüche 6 bis 11, **dadurch gekennzeichnet, dass** unterschiedliche Greifkörper (3) unterschiedliche Anzahlen Hänge-, Klemm-, Rast-, Schnapp-, und/oder Hakenelemente (9a,9b) und/oder Krall-, Widerhait-, Widerhakelemente oder sonstiger Schubmittel (9a,9b) aufweisen.

13. Aufnahmevorrichtung nach einem der Ansprüche 6-12, **dadurch gekennzeichnet, dass** die Greifkörper (3) der Fangeinrichtung (1) als vorspringende Klemmdome (6a,6b) oder Greifstifte ausgebildet sind, die als Schuppen-, Rast- oder Schnappelemente ein oder mehrere, sich in der Erzeugnis-Übemahmerichtung erweiternde Außenumfangsabschnitte (10,11a,11b) aufweisen, die durch jeweilige Abstufungen (9a,9b) oder radiale Hinterschneidungen als Widerhalt abgeschlossen sind.

14. Aufnahmevorrichtung nach Anspruch 13, **dadurch gekennzeichnet, dass** der Klemmdom (6a,6b) abwechselnd sich radial erweiternde und achsparallele Außenumfangsabschnitte (10,38) aufweist.

15. Aufnahmevorrichtung nach einem der Ansprüche 13 oder 14, **dadurch gekennzeichnet, dass** einem achsparaltelen Außenumfangsabschnitt (38) eines Klemmdorns (6a,6b) ein sich erweiternder Außenumfangsabschnitt (10) oder ein Schnappelement (9a,9b) eines anderen Klemmdorns (6b,6a) quer zur Übemahmerichtung (30) gegenüberllegt.

16. Aufnahmevorrichtung nach einem der Ansprüche 13 bis 15, **dadurch gekennzeichnet, dass** der Klemmdorn (6a,6b) an seinem freien Ende verjüngt (16) ist.

17. Aufnahmevorrichtung nach einem der Ansprüche 6-16, **dadurch gekennzeichnet, dass** die Greifkörper (3) zumindest teilweise mit unterschiedlichen Abständen (8a,8b) zueinander angeordnet sind.

18. Aufnahmevorrichtung nach Anspruch 17, **dadurch gekennzeichnet, dass** die einem zu erfassenden Erzeugnis (14) gemeinsam zugeordneten Greifkörper (3) teilweise mit einem größeren und teilweise mit einem kleineren Abstand (8a,8b) zueinander angeordnet sind, wobei die Greifkörper (3) mit kleinerem Abstand (8b) zueinander sich in der Anzahl an Hänge-, Klemm-, Rast-, Schnapp-, und/oder Hakenelementen und/oder Widerhalt-, Widerhakelementen oder sonstigen Zieh- und/oder Schubmitteln (9a,9b;24) unterscheiden, und die Elemente oder Mittel (9a,9b,24) dieser Greifkörper (3) in Richtung von der Fang- zur Stapelhalteeinrichtung (1,2) gegeneinander versetzt angeordnet sind.

19. Aufnahmevorrichtung nach einem der Ansprüche 6-18, **dadurch gekennzeichnet, dass** die Greifkörper (3) der Stapelhalteeinrichtung (2) als flächige Krallvorsprünge (20) mit einer dem Erzeugnis zugeordneten Innenseite (23) und einer rückwärtigen Außenseite ausgebildet sind, wobei auf der Innenseite (23) eine oder mehrere Hinterschneidungen, Stufen (24) oder Vertiefungen als Krallelemente oder Schubmittel gebildet sind, wobei sich mehrere, einem gemeinsamen Erzeugnis zugeordneter Krallvorsprünge (20) in Umfangsrichtung (7a) derart flächig erstrecken, dass sie ein bis drei Zehntel, vorzugsweise ein Viertel, des Umfangs oder Umrißprofils des Erzeugnisses (14) abdecken.

20. Aufnahmevorrichtung nach Anspruch 19, **dadurch gekennzeichnet, dass** die Krallvorsprünge (20) mittels lösbarer Fixiermittel, beispielsweise Schraubmittel (63,Fig.4), auf der Stapelhalteeinrichtung (1,2) abnehmbar befestigt sind.

21. Aufnahmevorrichtung nach einem der Ansprüche 6-20, **dadurch gekennzeichnet, dass** wenigstens die Fang- oder vorzugsweise die Stapelhalteeinrichtung (1,2) ortsfest beziehungsweise still gehalten ist und die jeweils andere Einrichtung (2,1) beweglich gelagert und angetrieben ist.

22. Aufnahmevorrichtung nach einem der Ansprüche 6-21, **dadurch gekennzeichnet, dass** die Fang- und/oder Stapeihalteeinrichtung (1,2) jeweils in eine Mehrzahl von vorzugsweise gleichartigen Zellen (32) oder sonstigen Bereichen zur Aufnahme einer entsprechenden Mehrzahl von Erzeugnissen (14) gleichzeitig untergliedert sind, wobei innerhalb einer Zelle (32) die Greifkörper (3) längs eines Profils oder Grundrisses angeordnet sind, das dem Umfang, Umriß oder der sonstigen Gestalt des aufzunehmenden Erzeugnisses (14) entspricht, und die Fang- und/oder Stapelhalteeinrichtung (1,2) mit einer flachen und/oder plattenartigen Grundform gestaltet ist, die von den Zellen (32) und/oder sonstigen. Aufnahmebereichen in der Erzeugnis-Übernahmerichtung (30) durchsetzt ist.

23. Aufnahmevorrichtung nach einem der Ansprüche 6-22, **dadurch gekennzeichnet, dass** in der Stapelhalteeinrichtung (2) mindestens ein Stapelkanal (40) und ein oder mehrere Krallorgane (39) angeordnet sind, welches oder welche parallel zum Stapelkanal (40) verlaufen, diesen umgeben und auf ihrer dem Stapelkanal (40) zugewandten Innenseite mit einem oder mehreren, jeweils rotatorisch und/oder translatorisch verstellbaren Greifklinken (41) zum Erfassen von Serien-Stückgütern, insbesondere Kunststoffbechem, versehen sind, wobei die Greifklinke (41) um eine Drehachse (51) frei drehbar gelagert ist, die parallel zum Stapeikanal (40) verläuft.

24. Aufnahmevorrichtung nach Anspruch 23, **dadurch gekennzeichnet, dass** die Drehachse (51) durch einen Basiskörper (46) der Greifklinke (41) verläuft.

25. Aufnahmevorrichtung nach Anspruch 23 oder 24, wobei das Krallorgan (39) eine die Greifklinke(n) (41) außenseitig umgebende Schutzwandung (42) aufweist, **gekennzeichnet durch** eine Ausbildung und Anordnung der Schutzwandung (42) gegenüber der Greifklinke (41) mit einem Abstand derart, dass die der Greifklinke (41) zugewandte Innenseite der Schutzwandung einen Drehbegrenzungsanschlag (64) mit Drehspiel (60) für die: Greifklinke (41) bildet.

26. Aufnahmevorrichtung nach einem der vorangehenden Ansprüche 23-25, **dadurch gekennzeichnet, dass** die Drehachse (46,51) der Greifklinke (41) innerhalb der der Schutzwandung (42) aufgenommen ist und an ihrem freien Ende die Greifklinke (41) frei drehbar trägt.

27. Aufnahmevorrichtung nach Anspruch 26, **dadurch gekennzeichnet, dass** die Schutzwandung (42) auf ihrer Innenseite mit einer zur Drehachse (46,51) führenden, vorzugsweise radial verlaufenden Öffnung oder Aussparung (54) versehen ist, um etwaige Mittel der Drehachse (46,51) zu ihrer Arretierung gegenüber der umgebenden Schutzwandung (42) zu betätigen.

28. Aufnahmevorrichtung nach Anspruch 26 oder 27, **gekennzeichnet durch** eine an der Greifklinke (41) angeordnete und einem zu ergreifenden oder Stapelgut zugeordnete Innenseite (23) und eine dazu rückwärtige Außenseite, wobei auf der Innenseite (23) eine oder mehrere Hinterschneidungen, Stufen (24) oder Vertiefungen als Krallelemente oder Schubmittel für das Erzeugnis, oder Stapelgut gebildet sind, und **durch** eine der Greifklinke (41) körperelgene Drehachse (46,51), die mit einem länglichen Basiskörper (46) mit einem Kopf- und einem Fußende (57,49) realisiert ist, wobei am Kopfende (57) ein dem jeweilige Stapelgut zugeordneter Greifkopf (47) frei drehbar gelagert ist, und im mittleren Bereich des Basiskörpers(46) oder an dessen Fußende (49) Mittel (50,52) zur Arretierung an oder gegenüber der Stapelhalteeinrichtung (2) ausgebildet sind.

29. Aufnahmevorrichtung nach Anspruch 28, **dadurch gekennzeichnet, dass** der Basiskörper (46) mit elastisch und/oder federn biegsamen Material hergestellt ist.

30. Aufnahmevorrichtung nach Anspruch 28 oder 29, **dadurch gekennzeichnet, dass** der Greifkopf (47) am Basiskörper (46) lösbar beziehungsweise abnehmbar angebracht und innenseitig in seiner Form und/oder Kontur an das Zu erfassende Stapelgut angepaßt ist.

31. Aufnahmevorrichtung nach einem der Ansprüche 28-30, **dadurch gekennzeichnet, dass** der Greifkopf (47) auf dem Kopfende (57) über eine Schraubverbindung hin- und herdrehbar (60) angeordnet ist.

32. Aufnahmevorrichtung nach einem der Ansprüche 28-31, **dadurch gekennzeichnet, dass** die Arretierungsmittel (50,52) mit einem manuell schraubbaren Außengewindestift (52) und einer mit diesem In Eingriff stehenden, querverlaufenden und durchgehenden Innengewindebohrung (50) im mittleren Bereich oder am Fußende (49) des Basiskörpers (46) realisiert sind.

33. Aufnahmevorrichtung nach Anspruch 28, 31 und 32, **dadurch gekennzeichnet, dass** der Basiskörper (46) für den Greifkopf (47) einen Einschraub-Begrenzungsanschlag (58) aufweist, der zu einem Einschraubgewinde am Kopfende (57) des Basiskörpers (46) einen derart bemessenen Abstand besitzt, dass bei Anschlag beziehungsweise Anliegen des Greifkopfes (47) am Begrenzungsanschlag (58) die Mittelachse der Innengewindebohrung (50) parallel zu einer gedachten Geraden verläuft, welche eine dem Stapelgut zugeordnete Seitenoberfläche des Greifkopfes (47) in einem schrägen Winkel durchsetzt.

## Claims

1. Method of receiving mass-produced or stacked goods or products (14), in particular plastics cups, which after being made in a moulding and/or punching tool, are ejected therefrom, having an intercepting device (1) with a gripping body (3) with pushing means (9a, 9b), with which intercepting device the ejected products are grasped, and having a stack holding device (2), which has a gripping body (3) with pulling means (24) which receives the products (14) from the intercepting device (1) and keeps them available in a queued manner for further transport, the intercepting and stack holding device (1, 2) being moved together and apart (30), and the stack holding device (2) being used in the movement together for grasping the product(s) in the intercepting device (1), **characterised in that** during the movement towards one another the intercepting and stack holding device (1, 2) are moved into one another with their gripping bodies (3) and/or are penetrated by one another and thereby the last product (14) ejected into the intercepting device (1) is pushed into the stack holding device (2) by the pushing means (9a, 9b), and during the movement apart, the last product (14) ejected into the intercepting device (1) is pulled out of the intercepting device (1) by means of the pulling means of the stack holding device (2).

2. Method according to claim 1, **characterised in that** during the movement towards one another, a product (14) already in the stack holding device (2) is pushed on by the pushing means (9a, 9b) of the intercepting device (1) for stacking.

3. Method according to claim 1 or 2, **characterised in that** in the movement towards one another a product (14) already gripped or located in the stack holding device is pushed further by means of the pushing means (9a, 9b) of the intercepting device (1) in such a manner that the product (14) last gripped in the stack holding device (2) is held for the period of at least one associated movement apart and together (30) until the next product which is untouched by previously grasped products is grasped.

4. Method according to claim 1, 2 or 3, **characterised in that** within a pick-up cycle for the plastics product (14) from the shaping and/or punching tool into the stack holding device (2), in a first phase the plastics product (14) is grasped from the shaping and/or punching tool direct by means of the intercepting device (1) and a second phase involves transfer of the plastics product (14) from the intercepting device (1) direct to the stack holding device (2), so that the intercepting device (1) forms a single intermediate station between the shaping and/or punching tool and the stack holding device (2).

5. Method according to claim 4, **characterised in that** the movement (30) of the intercepting device (1) in the first phase and in the second phase takes place exclusively linearly or in a straight line.

6. Device for receiving mass-produced products (14), in particular plastics cups, which after their formation in a shaping and/or punching tool are ejected therefrom, having an intercepting device (1) allocated to the tool in order to grasp the products (14) form the tool, and having a stack holding device (2) which is downstream of the intercepting device and in which the products (14) are kept available in order to be picked up and queued for further transport, the intercepting and stack holding device (1, 2) being movable (30) together and apart and having gripping bodies (3) projecting towards one another for detachably gripping the products (14), and the gripping bodies being so formed with pushing and pulling means (9a, 9b; 24) for the products that upon movement (30) of the intercepting and stack holding device together and apart, the products (14) can be picked up by means of pushing, grasping and pulling out of the products (14) from the intercepting into the stack holding device (1, 2), in particular for carrying out the method according to one of the preceding claims, **characterised in that** both the intercepting and the stack holding device (1, 2) are formed with a respective carrying ring (4a, 4b) or carrying tray with a hole, and on the opposite ends (5a, 5b) of the carrying rings (4a, 4b) or carrying trays the gripping bodies (3) are respectively fixed in a distributed arrangement and are in this case spaced in such a manner that the intercepting and stack holding device (1, 2) mutually penetrate one another or mesh with one another in the course of their movement (30) towards or into one another with their respective gripping bodies (3).

7. Device according to claim 6, **characterised in that** in the gripping bodies (3) of the intercepting device (1), a plurality of stacked or consecutive pushing means (9a, 9b) are disposed for direct action on a respective product (14) in such a manner that for the product (14) last taken into the stack holding device a distance is kept from the stack of previously transferred products (14).

8. Receiving device according to claim 6 or 7, **characterised in that** the gripping bodies (3) of the intercepting device (1) are disposed along a profile or outline, which corresponds to the circumference, outline or other shape of the product (14) to be received.

9. Receiving device according to one of claims 6-8, **characterised in that** the gripping bodies (3) are provided with hanging, clamping, locking, snap-fitting, and/or hooking elements (9a, 9b), which are formed for detachable engagement with the product (14) to be grasped.

10. Receiving device according to one of claims 6 to 9, **characterised in that** on different gripping bodies (3), hanging, clamping, locking, snap-fitting, and/or hooking elements (9a, 9b) and/or the claw, support, counter-hooking, or other pulling and/or pushing means (9a, 9b; 24) are provided, offset relative to one another in the direction of the intercepting or stack holding device (1, 2) for detachable engagement with the product (14) to be grasped.

11. Receiving device according to claims 6-10, **characterised in that** the gripping bodies are so formed with claw, support, counter-hooking elements or other pulling and/or pushing means (24) that in the course of the movement apart of the intercepting and stack holding device (1, 2) a pushing force in the direction of the intercepting and stack holding device (1, 2) is imparted to the products (14) grasped.

12. Receiving device according to one of claims 6 to 11, **characterised in that** different gripping bodies (3) have different numbers of hanging, clamping, locking, snap-fitting, and/or hooking elements (9a, 9b) and/or claw, support, counter-hooking or other pushing means (9a, 9b).

13. Receiving device according to one of claims 6-12, **characterised in that** the gripping bodies (3) of the intercepting device (1) are formed as protruding mandrels (6a, 6b) or gripping pins, which have in the product-taking direction widening outer circumference sections (10, 11a, 11b), which are closed as a support by radial steps (9a, 9b) or radial undercuts.

14. Receiving device according to claim 13, **characterised in that** the mandrel (6a, 6b) has alternately radially widening and axially parallel outer circumference sections (10, 38).

15. Receiving device according to one of claims 13 or 14, **characterised in that** opposite an axially parallel outer circumference section (38) of a mandrel (6a, 6b) is a widening outer circumference section (10) or snap-fitting element (9a, 9b) of another mandrel (6b, 6a), transverse to the pick-up direction (30).

16. Receiving device according to one of claims 13 to 15, **characterised in that** the mandrel (6a, 6b) tapers (16) at its free end.

17. Receiving device according to one of claims 6-16, **characterised in that** the gripping bodies (3) are disposed at least in part at different distances (8a, 8b) from one another.

18. Receiving device according to claim 17, **characterised in that** the gripping bodies (3) allocated in common to a product (14) to be grasped are arranged with some at a greater distance and some at a smaller distance (8a, 8b) from one another, the gripping bodies (3) with a smaller distance (8b) differing from one another in the number of hanging, clamping, locking, snap-fitting and/or hooking elements and/or support, counter-hooking elements or other pulling and/or pushing means (9a, 9b; 24), and the elements or means (9a, 9b, 24) of these gripping bodies (3) being arranged in a staggered manner in the direction from the intercepting to the stack holding device (1, 2).

19. Receiving device according to one of claims 6-18, **characterised in that** the gripping bodies (3) of the stack holding device (2) are formed as plane claw projections (20) with an inner face (23) associated with the product and a rear outer face, wherein on the inner face (23) one or more undercuts, steps (24) or recesses are formed as claw elements or pushing means, and wherein a plurality of claw projections (20) allocated to a common product extend in a plane manner in the circumferential direction (7a), so that they cover one to three tenths, preferably a quarter, of the circumference or outline of the product (14).

20. Receiving device according to claim 19, **characterised in that** the claw projections (20) are removably fixed to the stack holding device (1, 2) by means of detachable fixing means, e.g. screw means (63, Fig. 4).

21. Receiving device according to one of claims 6-20, **characterised in that** at least the intercepting or preferably the stack holding device (1, 2) is kept stationary or still and the respective other device (2, 1) is mounted movably and is driven.

22. Receiving device according to one of claims 6-21, **characterised in that** the intercepting and/or stack holding device (1, 2) are divided into plural, preferably similar cells (32) or other regions for receiving a corresponding plurality of products (14) at the same time, wherein inside a cell (32) the gripping bodies (3) are disposed along a profile or outline corresponding to the circumference, outline or other shape of the product (14) to be received, and the intercepting and/or stack holding device (1, 2) is formed with a flat and/or plate-like base form, which is penetrated by the cells (32) and/or other receiving regions in the product pick-up device (30).

23. Receiving device according to one of claims 6-22, **characterised in that** at least one stack channel (40) and one or more claw elements (39) are provided, which extend parallel to the stack channel (40), surround the same and are provided on their inner face associated with the stack channel (40) with one or more respectively rotary and/or translational gripping catches (41) for grasping mass-produced goods, in particular plastics cups, wherein the gripping catch (41) is freely rotatable about an axis of rotation (51) which extends parallel to the stack channel (40).

24. Receiving device according to claim 23, **characterised in that** the axis of rotation (51) extends through a base body (46) of the gripping catch (41).

25. Receiving device according to claim 23 or 24, wherein the claw element (39) has a protective wall (42) surrounding the gripping catch(es) (41) on the outside, **characterised by** a formation and arrangement of the protective wall (42) opposite the gripping catch (41) at a distance in such a manner that the inner face of the protective wall associated with the gripping catch (41) forms a rotation limit stop (64) with rotary play (60) for the gripping catch (41).

26. Receiving device according to one of the preceding claims 23-25, **characterised in that** the axis of rotation (46, 51) of the gripping catch (41) is received inside the protective wall (42) and freely rotatably carries the gripping catch (41) at its free end.

27. Receiving device according to claim 26, **characterised in that** the protective wall (42) is provided on its inner face with an aperture or recess (54) extending preferably radially and leading to the axis of rotation (46, 51), in order to actuate any means of the axis of rotation (46, 51) for stopping the same with respect to the surrounding protective wall (42).

28. Receiving device according to claim 26 or 27, **characterised by** an inner face (23) disposed on the gripping catch (41) and allocated to the product or stacked goods and an outer face to the rear thereof, wherein on the inner face (23) one or more undercuts, steps (24) or recesses are formed as claw elements or pushing means for the product or stacked goods and by an axis of rotation (46, 51) belonging to the body which is realised with an elongate base body (46) having a top and bottom end (57, 49), wherein at the top end (57) a gripping head (47) allocated to the respective stacked goods is freely rotatably mounted, and in the central region of the base body (46) or at its bottom end (49) means (50, 52) are formed for stopping on or against the stack holding device (2).

29. Receiving device according to claim 28, **characterised in that** the base body (46) is manufactured from resilient and/or flexible material.

30. Receiving device according to claim 28 or 29, **characterised in that** the gripping head (47) is mounted detachably or removably on the base body (46) and is adapted on the inside in its shape and/or contour to the stacked goods to be grasped.

31. Receiving device according to one of claims 28-30, **characterised in that** the gripping head (47) is disposed on the top end (57) so as to rotate to and fro (60) via a screw connection.

32. Receiving device according to one of claims 28-31, **characterised in that** the stopping means (50, 52) are realised with a manually screw-adjustable outer threaded pin (52) and a female-threaded bore (50) meshing therewith, running transverse thereto and penetrating the same, in the central region or at the bottom end (49) of the base body (46).

33. Receiving device according to one of claims 28, 31 and 32, **characterised in that** the base body (46) for the gripping head (47) has a screw-in limit stop (58), which has a distance from a screw thread on the top end (57) of the base body (46), the distance being so dimensioned that upon stopping or abutment of the gripping head (47) on the limit stop (58), the central axis of the female-threaded bore (50) extends parallel to a hypothetical straight line, which penetrates a lateral surface of the gripping head (47) associated with the stacked goods at an oblique angle.

## Revendications

1. Procédé de réception de marchandises ou produits de détail ou empilables (14) de grande série, notamment des gobelets ou pots de matière plastique, qui après leur fabrication dans un outillage de formage et/ou de matriçage en sont éjectés, comprenant un dispositif de capture (1) présentant des corps de préhension (3) avec des moyens de poussée (9a, 9b), à l'aide duquel les produits éjectés sont saisis, et comprenant un dispositif de support d'empilements (2) présentant des corps de préhension (3) et des moyens de traction (24), qui reçoit les produits (14) à partir du dispositif de capture (1) et les maintient à disposition pour la poursuite de leur transport en étant rangés les uns à la suite aux autres, le dispositif de capture et le dispositif de support d'empilements (1, 2) étant rapprochés l'un de l'autre et écartés l'un de l'autre (30), et le dispositif de support d'empilements (2) étant utilisé, lors du mouvement de rapprochement pour saisir le ou les produits (14) dans le dispositif de capture (1),
**caractérisé en ce que** lors du mouvement de rapprochement, le dispositif de capture et le dispositif de support d'empilements (1, 2), avec leurs corps de préhension (3), sont déplacés l'un dans l'autre et/ou pénétrés ou traversés l'un par l'autre, un produit (14) éjecté en dernier lieu dans le dispositif de capture (1) étant à cette occasion repoussé par les moyens de poussée (9a, 9b) dans le dispositif de support d'empilements (2), et lors du mouvement d'écartement, le produit (14) ayant été éjecté en dernier lieu dans le dispositif de capture (1), est retiré du dispositif de capture (1) à l'aide des moyens de traction (24) du dispositif de support d'empilements (2).

2. Procédé selon la revendication 1, **caractérisé en ce que** lors du mouvement de rapprochement, un produit (14) se trouvant déjà dans le dispositif de support d'empilements (2), est déplacé davantage pour son empilement par les moyens de poussée (9a, 9b) du dispositif de capture (1).

3. Procédé selon la revendication 1 ou 2, **caractérisé en ce que** lors du mouvement de rapprochement, un produit (14) se trouvant déjà ou ayant déjà été saisi auparavant dans le dispositif de support d'empilements (2), est déplacé davantage dans le dispositif de support d'empilements (2) à l'aide des moyens de poussée (9a, 9b) du dispositif de capture (1), de façon telle que le produit (14) respectivement saisi en dernier lieu dans le dispositif de support d'empilements (2), reste hors de contact de produits saisis précédemment, pour la durée d'au moins un mouvement d'écartement et d'au moins un mouvement de rapprochement (30) successifs, jusqu'à la saisie du produit suivant.

4. Procédé selon la revendication 1, 2 ou 3, **caractérisé en ce que** dans le cadre d'un cycle de transfert pour le produit en matière plastique (14) de l'outillage de formage et/ou de matriçage au dispositif de support d'empilements (2), lors d'une première phase, le produit en matière plastique (14) est saisi directement dans l'outillage de formage et/ou de matriçage par le dispositif de capture (1), et au cours d'une seconde phase, est effectué un transfert du produit en matière plastique (14) directement du dispositif de capture (1) au dispositif de support d'empilements (2), de sorte que le dispositif de capture (1) forme un seul poste intermédiaire entre l'outillage de formage et/ou de matriçage et le dispositif de support d'empilements (2).

5. Procédé selon la revendication 4, **caractérisé en ce que** le déplacement (30) du dispositif de capture (1) au cours de la première phase et au cours de la seconde phase, s'effectue exclusivement de manière linéaire ou rectiligne.

6. Dispositif de réception de produits (14) de grande série, notamment des gobelets ou pots de matière plastique, qui après leur fabrication dans un outillage de formage et/ou de matriçage en sont éjectés, comprenant un dispositif de capture (1) associé à l'outillage et destiné à saisir et prélever les produits (14) dans l'outillage, et un dispositif de support d'empilements (2) en aval du dispositif de capture et dans lequel les produits (14) peuvent être repris et maintenus à disposition pour la poursuite de leur transport en étant rangés les uns à la suite aux autres, le dispositif de capture et le dispositif de support d'empilements (1, 2) pouvant être rapprochés l'un de l'autre et écartés l'un de l'autre (30) et présentant des corps de préhension (3) en saillie les uns vers les autres pour la saisie amovible des produits (14), et les corps de préhension étant réalisés avec des moyens de poussée et de traction (9a, 9b ; 24) pour les produits, de façon telle qu'avec le mouvement de rapprochement et d'écartement mutuel (30) du dispositif de capture et du dispositif de support d'empilements, il puisse se produire un transfert par poussée, saisie et extraction des produits (14), du dispositif de capture au dispositif de support d'empilements (, 2), notamment pour la mise en oeuvre du procédé selon l'une des revendications précédentes, **caractérisé en ce qu'**aussi bien le dispositif de capture que le dispositif de support d'empilements (1, 2) sont réalisés chacun avec un anneau de support (4a, 4b) ou une plaque de support avec évidement de passage, et les corps de préhension (3) sont fixés de manière respectivement répartie sur les faces frontales (5a, 5b) en regard l'une de l'autre des anneaux de support (4a, 4b) ou plaques de support, et sont décalés mutuellement de façon telle que le dispositif de capture et le dispositif de support d'empilement (1, 2), au cours de leur mouvement (30) de rapprochement et/ou l'un vers l'autre, s'engagent l'un dans l'autre et/ou se pénètrent ou se traversent mutuellement avec leur corps de préhension (3).

7. Dispositif selon la revendication 6, **caractérisé en ce que** sur les corps de préhension (3) du dispositif de capture (1) sont respectivement disposés plusieurs moyens de poussée (9a, 9b) étagés ou agencés les uns à la suite des autres pour l'action directe sur un produit (14), de façon à respecter pour le produit (14) repris en dernier lieu dans le dispositif de support d'empilements, une distance d'espacement par rapport à l'empilement de produits (14) repris précédemment.

8. Dispositif selon la revendication 6 ou 7, **caractérisé en ce que** les corps de préhension (3) du dispositif de capture (1) sont disposés le long d'un profil ou tracé de base, qui correspond à la périphérie, au contour ou à une autre configuration du produit (14) à prélever.

9. Dispositif selon l'une des revendications 6 à 8, **caractérisé en ce que** les corps de préhension (3) sont pourvus d'éléments de suspension, de coincement, d'enclenchement, d'encliquetage et/ou d'accrochage (9a, 9b) qui sont conçus pour venir en prise amovible avec le produit (14) à saisir.

10. Dispositif selon l'une des revendications 6 à 9, **caractérisé en ce que** sur des corps de préhension (3) différents sont disposés des éléments de suspension, de coincement, d'enclenchement, d'encliquetage et/ou d'accrochage (9a, 9b) et/ou des éléments à griffes, des éléments de retenue ou à crochets de retenue ou d'autres moyens de traction et/ou de poussée (9a, 9b ; 24) de manière mutuellement décalée dans la direction du dispositif de capture (1) au dispositif de support d'empilements (2) pour venir en prise amovible avec le produit (14) à saisir.

11. Dispositif selon l'une des revendications 6 à 10, **caractérisé en ce que** les corps de préhension sont réalisés avec des éléments à griffes, des éléments de retenue ou à crochets de retenue ou d'autres moyens de traction et/ou de poussée (24), de manière telle, qu'au cours du mouvement d'écartement (30) des dispositifs de capture et de support d'empilements (1, 2), une force de poussée ou de traction dans la direction du dispositif de capture (1) vers le dispositif de support d'empilements (2) soit conférée aux produits (14) saisis.

12. Dispositif selon l'une des revendications 6 à 11, **caractérisé en ce que** des corps de préhension (3) différents présentent des nombres différents d'éléments de suspension, de coincement, d'enclenchement, d'encliquetage et/ou d'accrochage (9a, 9b) et/ou d'éléments à griffes, d'éléments de retenue ou à crochets de retenue ou d'autres moyens de poussée (9a, 9b).

13. Dispositif selon l'une des revendications 6 à 12, **caractérisé en ce que** les corps de préhension (3) du dispositif de capture (1) sont réalisés en tant que mandrins de coincement (6a, 6b) ou broches de serrage en saillie, qui en tant qu'éléments en forme d'écaille, éléments d'encliquetage ou d'enclenchement, présentent un ou plusieurs tronçons de périphérie extérieure (10, 11a, 11b) s'évasant dans le dispositif de reprise des produits, et qui se terminent par des gradins respectifs (9a, 9b) ou des contre-dépouilles radiales en tant que système de retenue.

14. Dispositif selon la revendication 13, **caractérisé en ce que** le mandrin de coincement (6a, 6b) présente alternativement des tronçons de périphérie extérieure (10, 38) s'évasant radialement et parallèles à l'axe.

15. Dispositif selon l'une des revendications 13 ou 14, **caractérisé en ce que** transversalement à la direction de transfert (30), en regard d'un tronçon de périphérie extérieure (38) parallèle à l'axe d'un mandrin de coincement (6a, 6b), se trouve un tronçon de périphérie extérieure (10) qui s'évase ou un élément d'enclenchement d'un autre mandrin de coincement (6a, 6b).

16. Dispositif selon l'une des revendications 13 à 15, **caractérisé en ce que** le mandrin de coincement (6a, 6b) se rétrécit à son extrémité libre (16).

17. Dispositif de réception selon l'une des revendications 6 à 16, **caractérisé en ce que** les corps de préhension (3) sont disposés au moins en partie, de façon à présenter des distances d'espacement (8a, 8b) différentes les uns par rapport aux autres.

18. Dispositif de réception selon la revendication 17, **caractérisé en ce que** les corps de préhension (3) associés en commun à un produit (14) à saisir sont disposés en partie avec une distance d'espacement réciproque plus importante et en partie avec une distance d'espacement réciproque plus petite (8a, 8b), les corps de préhension (3) à distance d'espacement réciproque plus petite (8b) se différencient quant au nombre d'éléments de suspension, de coincement, d'enclenchement, d'encliquetage et/ou d'accrochage (9a, 9b) et/ou d'éléments de retenue ou à crochets de retenue ou d'autres moyens de traction et/ou de poussée (9a, 9b ; 24), et les éléments ou moyens (9a, 9b ; 24) de ces corps de préhension (3) sont disposés de manière décalée les uns par rapport aux autres dans la direction du dispositif de capture (1) vers le dispositif de support d'empilements (2).

19. Dispositif de réception selon l'une des revendications 6 à 18, **caractérisé en ce que** les corps de préhension (3) du dispositif de support d'empilements (2) sont réalisés en tant que protubérances plates à griffe (20) avec un côté intérieur (23) affecté au produit et un côté extérieur arrière, un ou plusieurs gradins (24), creux ou contre-dépouilles étant formés sur le côté intérieur (23) en tant qu'éléments à griffe ou moyens de poussée, plusieurs protubérances à griffe (20) affectées à un produit commun s'étendant en surface dans la direction périphérique (7a) de manière à couvrir un à trois dixièmes, de préférence un quart de la périphérie ou du profil du contour du produit (14).

20. Dispositif de réception selon la revendication 19, **caractérisé en ce que** les protubérances à griffe (20) sont fixées de manière démontable sur le dispositif de support d'empilements (2), à l'aide de moyens de fixation démontables, par exemple des moyens de vissage (63, figure 4).

21. Dispositif de réception selon l'une des revendications 6 à 20, **caractérisé en ce qu'**au moins le dispositif de capture ou de préférence le dispositif de support d'empilements (1, 2) est maintenu en position fixe, à savoir à l'arrêt, et l'autre dispositif respectif (2, 1) est monté de manière mobile et peut être entraîné.

22. Dispositif de réception selon l'une des revendications 6 à 21, **caractérisé en ce que** le dispositif de capture et/ou de support d'empilements (1, 2) sont chacun subdivisés en un grand nombre de cellules (32) ou d'autres zones de préférence similaires pour la réception simultanée d'un grand nombre correspondant de produits (14), les corps de préhension (3) étant disposés, à l'intérieur d'une cellule, le long d'un profil ou d'un contour de base qui correspond à la périphérie, au contour ou à une autre configuration du produit (14) à réceptionner, et le dispositif de capture et/ou de support d'empilements (1, 2) présente une forme de base plate et/ou de plaque traversée par les cellules (32) et/ou d'autres zones de réception dans la direction de transfert des produits (30).

23. Dispositif de réception selon l'une des revendications 6 à 22, **caractérisé en ce que** dans le dispositif de support d'empilements (2) sont disposés au moins un canal d'empilement (40) et un ou plusieurs organes à griffe (39) qui s'étend ou s'étendent parallèlement au canal d'empilement (40), entourent celui-ci et sont pourvus sur leur côté intérieur dirigé vers le canal d'empilement (40), d'un ou de plusieurs cliquets de préhension (41), pouvant chacun être déplacé en rotation et/ou en translation et destinés à saisir des marchandises de détail de grande série, notamment des gobelets ou pots en matière plastique, le cliquet de préhension (41) étant monté librement tournant autour d'un axe de rotation (51) qui s'étend parallèlement au canal d'empilement (40).

24. Dispositif de réception selon la revendication 23, **caractérisé en ce que** l'axe de rotation (51) s'étend à travers un corps de base (46) du cliquet de préhension (41).

25. Dispositif de réception selon la revendication 23 ou 24, l'organe à griffe (39) présentant une paroi de protection (42) entourant extérieurement le ou les cliquet(s) de préhension (41), **caractérisé par** une configuration et une disposition de la paroi de protection (42) par rapport au cliquet de préhension (41) réalisant une distance d'espacement telle que le côté intérieur de la paroi de protection, dirigé vers le cliquet de préhension (41), forme une butée de limitation de rotation (64) avec jeu de rotation (60), pour le cliquet de préhension (41).

26. Dispositif de réception selon l'une des revendications précédentes 23 à 25, **caractérisé en ce que** l'axe de rotation (46, 51) du cliquet de préhension (41) est logé à l'intérieur de la paroi de protection (42) et porte à son extrémité libre, de manière librement tournante, le cliquet de préhension (41).

27. Dispositif de réception selon la revendication 26, **caractérisé en ce que** la paroi de protection (42) est pourvue, sur son côté intérieur, d'une ouverture ou d'un évidement (54) conduisant vers l'axe de rotation (46, 51) et de préférence d'orientation radiale, en vue d'actionner d'éventuels moyens de l'axe de rotation (46, 51) pour son blocage par rapport à la paroi de protection (42) environnante.

28. Dispositif de réception selon la revendication 26 ou 27, **caractérisé par** un côté intérieur (23) agencé sur le cliquet de préhension (41) et affecté au produit ou à la marchandise empilable à saisir, et un côté extérieur arrière relativement au précédent, un ou plusieurs gradins (24), creux ou contre-dépouilles étant formés sur le côté intérieur (23) en tant qu'éléments à griffe ou moyens de poussée pour le produit ou la marchandise empilable, et par un axe de rotation (46, 51) propre au corps du cliquet de préhension (41), qui est réalisé avec un corps de base (46) allongé comportant une extrémité de tête et une extrémité de pied (57, 49), une tête de préhension (47) affectée au produit à empiler considéré étant montée librement tournante à l'extrémité de tête (57), et des moyens (50, 52) pour le blocage sur ou par rapport au dispositif de support d'empilements (2) étant réalisés dans la zone centrale du corps de base (46) ou à son extrémité de pied (49).

29. Dispositif de réception selon la revendication 28, **caractérisé en ce que** le corps de base (46) est réalisé en un matériau élastique et/ou flexible de manière élastique.

30. Dispositif de réception selon la revendication 28 ou 29, **caractérisé en ce que** la tête de préhension (47) est rapportée de manière démontable ou amovible sur le corps de base (46), et est adaptée sur le côté intérieur, quant à sa forme et/ou son contour, au produit empilable à saisir.

31. Dispositif de réception selon l'une des revendications 28 à 30, **caractérisé en ce que** la tête de préhension (47) est agencée sur l'extrémité de tête (57) par l'intermédiaire d'une liaison à vis, en pouvant être tournée selon un mouvement de va et vient.

32. Dispositif de réception selon l'une des revendications 28 à 31, **caractérisé en ce que** les moyens de blocage (50, 52) sont réalisés par une cheville à filetage extérieur (52) pouvant être vissée manuellement, et par un alésage à filetage intérieur (50) traversant, d'étendue transversale, dans la zone centrale ou à l'extrémité de pied (49) du corps de base (46), et en prise avec ladite cheville.

33. Dispositif de réception selon les revendications 28, 31 et 32, **caractérisé en ce que** le corps de base (46) comporte pour la tête de préhension (47), une butée de limitation de vissage (58) qui présente par rapport à un taraudage de vissage à l'extrémité de tête (57) du corps de base (46), une distance d'une valeur telle, que pour la venue en butée ou l'appui de la tête de préhension (47) sur la butée de limitation (58), l'axe médian de l'alésage à filetage intérieur (50) s'étend parallèlement à une droite fictive qui traverse selon un angle oblique une surface latérale de la tête de préhension (47) associée ou affectée à la marchandise empilable.
